# EUROPEAN PATENT APPLICATION

(11) **EP 4 811 883 A1**
(43) Date of publication of application: **23.09.2026**
(21) Application number: 24890849.3
(22) Date of filing: 18.11.2024
(51) Int. Cl.: H04W 52/14

(54) **DETERMINATION METHOD AND APPARATUS FOR TRANSMISSION POWER OF UPLINK SIGNAL, AND DEVICE AND MEDIUM**

(30) Priority: 17.11.2023 CN 202311537853
(71) Applicant: Datang Mobile Communications Equipment Co., Ltd., Beijing 100085 (CN)
(72) Inventor: HUANG, Qiuping, Beijing 100085 (CN); GAO, Qiubin, Beijing 100085 (CN)
(74) Representative: Studio Torta S.p.A.
(86) International application number: PCT/CN2024/132527
(87) International publication number: WO 2025/103497

(57) **Abstract**

Provided in the present disclosure are a determination method and apparatus for a transmission power of an uplink signal, and a device and a medium. The method in the present disclosure comprises: receiving a first signal and offset information which are sent by a network device; and on the basis of the first signal and the offset information, determining a pathloss corresponding to a second signal, and on the basis of the pathloss corresponding to the second signal, determining a transmission power of the second signal; or, on the basis of the first signal, determining a pathloss corresponding to the first signal, on the basis of the offset information, determining a pathloss offset and/or a reference signal received power (RSRP) offset, and on the basis of the pathloss corresponding to the first signal, the pathloss offset and/or the RSRP offset, determining a transmission power of a second signal.

## Description

### CROSS-REFERENCE TO RELATED APPLICATION

The present application is filed based on and claims the priority of Chinese Application No. 202311537853.4 filed on November 17, 2023 and entitled "uplink signal transmission power determining method and device, equipment and medium", the disclosure of which are incorporated in their entireties by reference herein.

### TECHNICAL FIELD

The present disclosure relates to the field of communication technologies, and in particular, to an uplink signal transmission power determining method and device, equipment and medium.

### BACKGROUND

In the related system, user equipment needs to determine a downlink pathloss based on a downlink signal, and then determine a transmission power of an uplink signal based on the downlink pathloss. All uplink transmission pathlosses are determined based on a pathloss reference signal.

Currently, due to limitations of UE transmission power, uplink (UL) transmission performance of UEs at a cell edge is usually far inferior to downlink (DL) transmission performance. In a distributed multiple-input multiple-output (MIMO) system, the distributed deployment of multiple sites can reduce pathloss, so that UL transmission performance is similar to DL transmission performance. The distributed MIMO system can also be called a multiple transmission and/or reception point (M-TRP) system, which includes intra-cell and/or inter-cell multiple TRPs. Dense site deployment may cause serious overlap of downlink coverages of multiple sites. On the one hand, in order to reduce downlink interference between sites with overlapping coverage, and on the other hand, for the consideration of network energy saving in low-load scenarios, the downlink transmission of some sites can be temporarily disabled while they are only used for uplink transmission reception. These sites can be referred as uplink Rx only (UL Rx only) transmission and/or reception point (TRP), or TRP without downlink transmission, or sites used only for uplink reception, etc. These UL Rx only TRPs may be some sites without DL transmission channels, or some sites with DL transmission channels but with the DL channels disabled in a given period of time.

For the UL Rx only TRP, since this site cannot transmit a downlink reference signal, the UE cannot calculate a pathloss based on a downlink reference signal of this site, and thus the UE cannot determine a transmission power of an uplink signal.

### SUMMARY

An object of the present disclosure is to provide an uplink signal transmission power determining method and device, equipment and medium, which can solve the problem in the related art that a transmission power of an uplink signal cannot be determined for uplink transmissions towards a site used only for uplink reception.

To achieve the above object, in a first aspect, one embodiment of the present disclosure provides an uplink signal transmission power determining method, applied to a user equipment, including:
receiving a first signal and offset information transmitted by a network device;
determining a pathloss corresponding to a second signal based on the first signal and the offset information, and determining a transmission power of the second signal based on the pathloss corresponding to the second signal; or,
determining a pathloss corresponding to the first signal based on the first signal, determining a pathloss offset and/or reference signal receiving power RSRP offset based on the offset information, and determining a transmission power of a second signal based on the pathloss corresponding to the first signal and the pathloss offset and/or RSRP offset.

In a second aspect, one embodiment of the present disclosure provides an uplink signal transmission power determining method, applied to a network device, including:
transmitting a first signal to a user equipment;
transmitting offset information to the UE;
receiving a second signal sent by the UE;
wherein the first signal and the offset information are used to determine the pathloss corresponding to the second signal, and the pathloss corresponding to the second signal is used to determine the transmission power of the second signal; or,
the first signal is used to determine the pathloss corresponding to the first signal, and the offset information is used to determine the pathloss offset and/or the reference signal receiving power RSRP offset; the pathloss corresponding to the first signal, and the pathloss offset and/or RSRP offset are used to determine the transmission power of the second signal.

In a third aspect, one embodiment of the present disclosure provides user equipment, including: a memory, a transceiver, and a processor; wherein the memory is used to store program instructions; the transceiver is used to send and receive data under the control of the processor; the processor is used to read the program instructions in the memory and perform the following operations:
receiving a first signal and offset information transmitted by a network device;
determining a pathloss corresponding to a second signal based on the first signal and the offset information, and determining a transmission power of the second signal based on the pathloss corresponding to the second signal; or,
determining a pathloss corresponding to the first signal based on the first signal, determining a pathloss offset and/or reference signal receiving power RSRP offset based on the offset information, and determining a transmission power of a second signal based on the pathloss corresponding to the first signal and the pathloss offset and/or RSRP offset.

In a fourth aspect, one embodiment of the present disclosure provides uplink signal transmission power determination device, including:
a first receiving unit used to receive a first signal and offset information transmitted by a network device;
a first processing unit used to determine a pathloss corresponding to a second signal based on the first signal and the offset information, and determine a transmission power of the second signal based on the pathloss corresponding to the second signal; or,
a second processing unit used to determine a pathloss corresponding to the first signal based on the first signal, determining a pathloss offset and/or reference signal receiving power RSRP offset based on the offset information, and determine a transmission power of a second signal based on the pathloss corresponding to the first signal and the pathloss offset and/or RSRP offset.

In a fifth aspect, one embodiment of the present disclosure provides network device, including: a memory, a transceiver, and a processor; wherein the memory is used to store program instructions; the transceiver is used to send and receive data under the control of the processor; the processor is used to read the program instructions in the memory and perform the following operations:
transmitting a first signal to a user equipment;
transmitting offset information to the UE;
receiving a second signal sent by the UE;
wherein the first signal and the offset information are used to determine the pathloss corresponding to the second signal, and the pathloss corresponding to the second signal is used to determine the transmission power of the second signal; or,
the first signal is used to determine the pathloss corresponding to the first signal, and the offset information is used to determine the pathloss offset and/or the reference signal receiving power RSRP offset; the pathloss corresponding to the first signal, and the pathloss offset and/or RSRP offset are used to determine the transmission power of the second signal.

In a sixth aspect, one embodiment of the present disclosure provides uplink signal transmission power determination device, including:
a first sending unit used to transmit first signal to a user equipment;
a second sending unit used to transmit offset information to the UE;
a second receiving unit used to receive a second signal sent by the UE;
wherein the first signal and the offset information are used to determine the pathloss corresponding to the second signal, and the pathloss corresponding to the second signal is used to determine the transmission power of the second signal; or,
the first signal is used to determine the pathloss corresponding to the first signal, and the offset information is used to determine the pathloss offset and/or the reference signal receiving power RSRP offset; the pathloss corresponding to the first signal, and the pathloss offset and/or RSRP offset are used to determine the transmission power of the second signal.

In a seventh aspect, one embodiment of the present disclosure provides processor-readable storage medium, including: program instructions stored thereon; wherein the program instructions are used to cause a processor to perform steps of the uplink signal transmission power determining method according to the first aspect, or perform steps of the uplink signal transmission power determining method according to the second aspect.

The above technical solution of the present disclosure at least provides the following advantageous effects.

In the above technical solution of the embodiments of the present disclosure, a first signal and offset information transmitted by a network device is received; a pathloss corresponding to a second signal is determined based on the first signal and the offset information, and a transmission power of the second signal is determined based on the pathloss corresponding to the second signal; or a pathloss corresponding to the first signal is determined based on the first signal, a pathloss offset and/or reference signal receiving power RSRP offset is determined based on the offset information, and a transmission power of a second signal is determined based on the pathloss corresponding to the first signal and the pathloss offset and/or RSRP offset. In this way, for uplink transmissions of a second signal toward a TRP that has no downlink transmission, the transmission power of the second signal can be determined based on the offset information and the first signal sent by the network device from other TRPs.

### BRIEF DESCRIPTION OF THE DRAWINGS

FIG. 1 is a first flow chart of an uplink signal transmission power determining method according to an embodiment of the present disclosure;
FIG. 2 is a second flow chart of an uplink signal transmission power determining method according to an embodiment of the present disclosure;
FIG. 3 is a schematic diagram of hardware structures of a UE according to an embodiment of the present disclosure;
FIG. 4 is a first schematic diagram of modules of an uplink signal transmission power determining device according to an embodiment of the present disclosure;
FIG. 5 is a schematic diagram of hardware structure of a network device according to an embodiment of the present disclosure; and
FIG. 6 is a second schematic diagram of modules of an uplink signal transmission power determining device according to an embodiment of the present disclosure.

### DETAILED DESCRIPTION

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present application, the term "plurality" refers to two or more than two, and other quantifiers are similar.

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

In order to facilitate understanding of the solutions of the present disclosure, relevant contents involved in the present disclosure are first introduced.

In radio communication systems (such as new radio (NR) system, long term evolution (LTE) system, etc.), for transmission of uplink signals (such as physical uplink shared channel (PUSCH), sounding reference signaling (SRS), physical random access channel (PRACH)), a user equipment needs to determine a pathloss based on a pathloss reference signal (PL-RS), and then determine a transmission power of an uplink signal based on the pathloss. PL-RS is a downlink signal, such as a synchronization signal/physical broadcasting channel block (SSB) or a channel state information reference signal (CSI-RS).

By taking PUSCH as an example, in the current NR system, the calculation formula for its transmission power is as follows:
for a PUSCH transmission occasion i which is transmitted on an activated uplink (UL) bandwidth part (BWP) b of a carrier f of a serving cell c and which is configured with a parameter set with an index j and and PUSCH power control adjustment state with an index l, its transmission power P_{PUSCH*,b,f,c*}(*i,j,q_{d},l*) is: $\begin{matrix}{P}_{PUSCH , b , f , c} \left(i, j, {q}_{d}, l\right) \\ = min \left\{\begin{matrix}{P}_{CMAX , f , c} \left(i\right) \\ {P}_{O _ PUSCH , b , f , c} \left(j\right) + 10 {log}_{10} \left({2}^{μ}⋅{M}_{SRS , b , f , c}\left(i\right)+{α}_{SRS , b , f , c}\left({q}_{s}\right)⋅{PL}_{b , f , c}\left({q}_{d}\right)+{h}_{b , f , c}\left(i, j\right)\right)\end{matrix}\right\} \left[dBm\right]\end{matrix}$
where the calculation of pathloss *PL_{b,f,c}*(*q_{d}*) is based on *PL_{b,f,c}*(*q_{d}*)=referenceSignalPower-higher layer filtered RSRP , where *q_{d}* is an identifier of a reference signal (i.e., PL-RS) used to determine the pathloss, referenceSignalPowe is determined by ss-PBCH-BlockPower or ss-PBCH-BlockPower+powerControlOffsetSS transmitted by high layer signaling (the default value is 0dB), and RSRP is a reference signal receiving power (RSRP) determined based on a reference signal corresponding to *q_{d}.* If the UE is not configured to receive periodic CSI-RS, referenceSignalPower is determined based on ss-PBCH-BlockPower transmitted by the base station through high layer signaling. If the UE is configured to receive periodic CSI-RS, referenceSignalPower is determined based on ss-PBCH-BlockPower, or powerControlOffsetSS, and powerControlOffsetSS provides an offset value of a transmission power of CSI-RS relative to a transmission power of SSB. If powerControlOffsetSS is not provided to the UE, the UE assumes a default offset value of 0dB.

Due to limitations of UE transmission power, uplink (UL) transmission performance of UEs at a cell edge is usually far inferior to downlink (DL) transmission performance. In a distributed multiple-input multiple-output (MIMO) system, the distributed deployment of multiple sites (i.e., TRPs) can reduce pathloss, so that UL transmission performance is similar to DL transmission performance. The distributed MIMO system can also be called a multiple TRP system, or a multiple transmission and/or reception point (M-TRP) system which includes intra-cell and/or inter-cell multiple TRPs. Dense site deployment may cause serious overlap of downlink coverages of multiple sites. On the one hand, in order to reduce downlink interference between sites with overlapping coverage, and on the other hand, for the consideration of network energy saving in low-load scenarios, the downlink transmission of some sites can be temporarily disabled while they are only used for uplink transmission reception. These sites can be referred as UL Rx only TRP, or TRP without downlink transmission, or sites used only for uplink reception, etc. These UL Rx only TRPs may be some sites without DL transmission channels, or some sites with DL transmission channels but with the DL channels disabled in a given period of time.

For the UL Rx only TRP, since this site cannot transmit a downlink reference signal, the UE cannot calculate a pathloss based on a downlink reference signal of this site, and thus the UE cannot determine a transmission power of an uplink signal.

In order to solve the above technical problems, the embodiments of the present disclosure provide an uplink signal transmission power determining method, device, equipment and medium. The method and the device are based on the same application concept. Since the principles of solving the problems by the method and the device are similar, implementation of the device and the method can refer to each other, and the repeated parts will not be repeated.

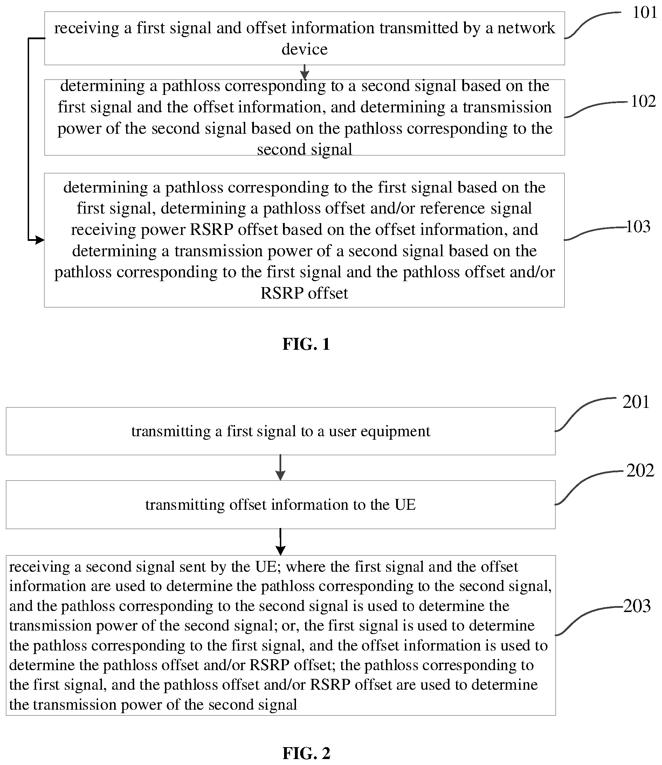

FIG. 1 is a flow chart of an uplink signal transmission power determining method according to an embodiment of the present disclosure, and the method is applied to a user equipment, that is, executed by the user equipment. The method may include:
Step 101: receiving a first signal and offset information transmitted by a network device.

Here, the network device may be a base station or a core network. The base station may include one or more cells providing services for the UE. The base station may include multiple TRPs, where the multiple TRPs include UL Rx only TRP and other TRPs (i.e., TRPs that can be used for both uplink transmission and downlink transmission). Depending on different application scenarios, the base station is called as an access point, a device in an access network in communication with the wireless terminal device through one or more sectors on an air interface, or any other name. The base station can also be called a node B (Node B), an evolved node B, an access point, a base transceiver station (BTS), a radio base station, a radio transceiver, a basic service set (BSS), an extended service set (ESS), a B node, an evolved B node (eNB), a home B node, a home evolved B node, a wireless local area network (WLAN) access point, a wireless fidelity (WiFi) node or some other suitable term in the field. As long as the same technical effect is achieved, the base station is not limited to a specific technical vocabulary. It is to be noted that in the embodiment of the present disclosure, the base station in the NR system is only taken as an example, but the specific type of the base station is not limited.

In some embodiments, the first signal includes a reference signal corresponding to a first signal resource. In some embodiments, the first signal is a reference signal transmitted based on the first signal resource. That is, the first signal is transmitted on a time-frequency domain resource corresponding to the first signal resource. In some embodiments, the first signal includes at least one of the following: SSB or CSI-RS. In some embodiments, the first signal resource is a downlink signal resource, including at least one of the following: SSB resource or CSI-RS resource.

In some embodiments, the first signal resource is a periodic signal resource.

In some embodiments, the first signal resource is a semi-persistent signal resource.

In some embodiments, the first signal resource is a non-periodic signal resource. In some embodiments, the network device transmits the offset information by at least one of the following:
radio resource control (RRC) signaling;
media access control control element (MAC-CE) signaling;
downlink control information (DCI) signaling.

In some embodiments, the offset information includes pathloss offset information and/or RSRP offset information. The pathloss offset information is used to indicate/determine a pathloss offset, and the RSRP offset information is used to indicate/determine an RSRP offset. Then, the UE can determine the pathloss offset and/or RSRP offset based on the offset information.

In some embodiments, the pathloss offset is an offset between a pathloss corresponding to a second signal and a pathloss corresponding to the first signal.

In some embodiments, the RSRP offset includes one or more of the following:
an offset between an RSRP corresponding to a second TRP and an RSRP corresponding to a first TRP, where the first TRP is a TRP corresponding to the first signal and the second TRP is a TRP corresponding to the second signal;
an offset between an RSRP corresponding to a second control resource set pool index and an RSRP corresponding to a first control resource set pool index, where the first control resource set pool index is a control resource set pool index corresponding to the first signal, and the second control resource set pool index is a control resource set pool index corresponding to the second signal;
an offset between an RSRP corresponding to a second TCI state and an RSRP corresponding to a first TCI state, where the first TCI state is a TCI state corresponding to the first signal, and the second TCI state is a TCI state corresponding to the second signal;
an offset between an RSRP corresponding to a second cell and an RSRP corresponding to a first cell, where the first cell is a cell corresponding to the first signal, and the second cell is a cell corresponding to the second signal;
an offset between an RSRP corresponding to a second SRS resource set and an RSRP corresponding to a first SRS resource set, where the first SRS resource set is an SRS resource set corresponding to the first signal, and the second SRS resource set is an SRS resource set corresponding to the second signal;
an offset between an RSRP corresponding to a second carrier and an RSRP corresponding to a first carrier, where the first carrier is a carrier corresponding to the first signal, and the second carrier is a carrier corresponding to the second signal; or
an offset between an RSRP corresponding to a second beam and an RSRP corresponding to a first beam, where the first beam is a beam corresponding to the first signal, and the second beam is a beam corresponding to the second signal.

The order in which the network device transmits the first signal and the offset information to the UE may not be in particular order. For example, the network device transmits the first signal and the offset information to the UE at the same time. For another example, the network device transmits the offset information after transmitting the first signal to the UE. For another example, the network device transmits the first signal after transmitting the offset information to the UE. For another example, there are multiple first signals, the offset information indicates an offset, the network device transmits the offset information after transmitting some first signals, and then continues to transmit the first signal. For another example, there are multiple first signals, and there are also multiple pieces of offset information, the network device transmits the first signal and the offset information alternately, for example, the network device transmits some pieces of offset information after transmitting some first signals, and then continues to transmit the first signal, and then continues to transmit the offset information; for another example, the network device transmits one piece of offset information every time it transmits one first signal, etc.

Step 102: determining a pathloss corresponding to a second signal based on the first signal and the offset information, and determining a transmission power of the second signal based on the pathloss corresponding to the second signal.

The second signal is an uplink signal. In some embodiments, the second signal includes at least one of the following: PUSCH, physical uplink control channel (PUCCH), PRACH, SRS, demodulation reference signal (DMRS).

The pathloss corresponding to the second signal refers to a pathloss of the second signal during transmission (transmitted from the UE to the network device).

In some embodiments, the UE calculates a pathloss corresponding to a second signal transmitted to a UL Rx only TRP based on a first signal (downlink signal) and offset information transmitted by the network device from a TRP with DL transmission, and then determines a transmission power of the second signal (uplink signal).

Alternatively, step 103: determining a pathloss corresponding to the first signal based on the first signal, determining a pathloss offset and/or reference signal receiving power RSRP offset based on the offset information, and determining a transmission power of a second signal based on the pathloss corresponding to the first signal and the pathloss offset and/or RSRP offset.

The pathloss corresponding to the first signal refers to a pathloss of the first signal during transmission (transmitted from the network device to the UE).

In some embodiments, the UE measures a first signal (a downlink signal) transmitted by the network device from a TRP that has DL transmission, to obtain the path loss corresponding to the first signal. Then, the UE calculates a transmission power of a second signal (an uplink signal) to be transmitted to a UL Rx-only TRP, based on the path loss corresponding to the first signal as well as a path loss offset and/or an RSRP offset determined based on the offset information.

In some embodiments, when an application scenario of the embodiment of the present disclosure is the UL Rx only TRP scenario, the first signal (downlink signal) is not a signal from the UL Rx only TRP, but a signal from other TRPs with downlink signal transmission; and the second signal (uplink signal) is transmitted to the UL Rx only TRP, so that the UE can calculate a pathloss based on the downlink signal transmitted by other TRPs, and then determine a transmission power of the uplink signal. Of course, the method of the embodiment of the present disclosure is not only applicable to the scenario with UL Rx only TRP configured, but also to the general scenario of uplink signal transmission. For the general scenario of uplink signal transmission, the method provided in the embodiment of the present disclosure can also determine a transmission power of an uplink signal.

In some embodiments, the first signal and the second signal have at least one of the following relationships:
the first signal and the second signal correspond to different control resource set pool indexes;
the first signal and the second signal correspond to different transmission reception points TRP;
the first signal and the second signal correspond to different transmission control information (TCI) states;
the first signal and the second signal correspond to different sounding reference signal SRS resource sets;
the first signal and the second signal correspond to different cells;
the first signal and the second signal correspond to different carriers.

In case that the first signal and the second signal correspond to different TRPs, the first signal is a downlink signal from one TRP, and the second signal is an uplink signal transmitted to another TRP. Determining the pathloss corresponding to the second signal based on the first signal and the offset information can achieve using a downlink signal of one TRP to determine a pathloss of an uplink signal of another TRP, and then determining the transmission power of the uplink signal. In a multi-TRP scenario including a UL Rx only TRP, it can be used for the UE to calculate a path loss for an uplink signal to be transmitted to the UL Rx-only TRP based on a downlink signal transmitted by the network device from a TRP with DL transmission, and then determine a transmission power of the uplink signal.

Determining a path loss corresponding to the first signal based on the first signal, and determining a path loss offset and/or a reference signal receiving power (RSRP) offset based on the offset information, determining a transmission power of a second signal based on the path loss of the first signal as well as the path loss offset and/or RSRP offset, can achieve using a downlink signal of one TRP to determine a transmission power of an uplink signal of another TRP. In a multi-TRP scenario including a UL Rx only TRP, it can be used for the UE to calculate a transmission power of an uplink signal to be transmitted to the UL Rx-only TRP, based on a downlink signal transmitted by the network device from a TRP with DL transmission.

Signals corresponding to different control resource set pools may correspond to different transmission antennas, different beams, different TRPs, etc. When the first signal and the second signal correspond to different control resource set pools (i.e., different control resource set pool indexes CORESETPoolIndex), the first signal is a downlink signal corresponding to one/a group of transmission antennas/beams/TRPs, and the second signal is an uplink signal corresponding to another/another group of transmission antennas/beams/TRPs. Based on the method of this embodiment, the UE can determine a transmission power of an uplink signal corresponding to another one/another group of transmission antennas/beams/TRPs based on a downlink signal of one/a group of transmission antennas/beams/TRPs. In particular, in a multi-TRP scenario, different TRPs can be configured with different control resource set pool indexes CORESETPoolIndex. When the first signal and the second signal correspond to different CORESETPoolIndex, based on the method of this embodiment, the UE can determine a transmission power of an uplink signal of another TRP based on a downlink signal of one TRP. In a multi-TRP scenario including a UL Rx only TRP, it can be used for the UE to calculate a transmission power of an uplink signal transmitted to the UL Rx only TRP based on a downlink signal transmitted by the network device from a TRP with DL transmission.

When the first signal and the second signal correspond to different TCI states, based on the method of this embodiment, the UE can determine a transmission power of an uplink signal corresponding to another TCI state based on a downlink signal corresponding to one TCI state. In some embodiments, different TCI states correspond to different beams and/or TRPs, etc. In particular, in a multi-TRP scenario, when different TRPs can be configured with different TCI states, and the first signal and the second signal correspond to different TCI states, the first signal is a downlink signal from one TRP, and the second signal is an uplink signal transmitted to another TRP, then based on the method of this embodiment, the UE can determine a transmission power of an uplink signal of another TRP based on a downlink signal of one TRP. In a multi-TRP scenario including a UL Rx only TRP, the UE can calculate a transmission power of an uplink signal transmitted to the UL Rx only TRP based on a downlink signal transmitted by the network device from a TRP with DL transmission.

When the first signal and the second signal correspond to different SRS resource sets, based on the method of this embodiment, the UE can determine a transmission power of an uplink signal corresponding to another SRS resource set based on a downlink signal corresponding to one SRS resource set. In particular, different SRS resource sets can correspond to different beams and/or TRPs, etc. In particular, in a multi-TRP scenario, when different TRPs are configured to correspond to different SRS resource sets, in case that the first signal and the second signal correspond to different SRS resource sets, the first signal is a downlink signal from one TRP, and the second signal is an uplink signal transmitted to another TRP, based on the method of this embodiment, the UE can determine a transmission power of an uplink signal of another TRP based on a downlink signal of one TRP. In a multi-TRP scenario including a UL Rx only TRP, it can be used for the UE to calculate a transmission power of an uplink signal transmitted to the UL Rx only TRP based on a downlink signal transmitted by the network device from a TRP with DL transmission.

When the first signal and the second signal correspond to different cells, based on the method of this embodiment, the UE can determine a transmission power of an uplink signal corresponding to one cell based on a downlink signal corresponding to another cell. In particular, in a multi-TRP scenario, different TRPs can be configured as different cells. Then, when the first signal and the second signal correspond to different cells, the first signal is a downlink signal from one TRP, and the second signal is an uplink signal transmitted to another TRP. Based on the method of this embodiment, the UE can determine a transmission power of an uplink signal of another TRP based on a downlink signal of one TRP. In a multi-TRP scenario including a UL Rx only TRP, the UE can calculate a transmission power of an uplink signal transmitted to the UL Rx only TRP, based on a downlink signal transmitted by the network device from a TRP with DL transmission.

When the first signal and the second signal correspond to different carriers, based on the method of this embodiment, the UE can determine, based on a downlink signal corresponding to one carrier, a transmission power of an uplink signal corresponding to another carrier. In particular, in a multi-TRP scenario, different TRPs can be configured with different carriers. When the first signal and the second signal correspond to different carriers, the first signal is a downlink signal from one TRP, and the second signal is an uplink signal transmitted to another TRP, then based on the method of this embodiment, the UE can determine, based on a downlink signal of one TRP, a transmission power of an uplink signal of another TRP. In a multi-TRP scenario including a UL Rx only TRP, the UE can calculate a transmission power of an uplink signal transmitted to the UL Rx only TRP, based on a downlink signal transmitted by the network device from a TRP with DL transmission.

In some optional embodiments, in the above step 102, the determining a pathloss corresponding to a second signal based on the first signal and the offset information, specifically includes:
Step 1021: determining a first RSRP based on the first signal.

In some embodiments, the first RSRP is a layer 1 (i.e., physical layer) reference signal receiving power L1-RSRP. In some embodiments, the first RSRP is a RSRP obtained after filtering the layer 1 (i.e., physical layer) reference signal receiving power L1-RSRP. The filtering includes high layer filtering, or a method of filtering multiple measurement quantities by using some filter coefficients, etc., for example, in order to obtain an average value for multiple measurement quantities (or multiple numerical values), where the average value can be a linear average value, a weighted average value, or another type of average value. One method of performing high layer filtering on a measurement quantity Mn (replacing Mn with L1-RSRP is to perform filtering on L1-RSRP) is as follows: ${F}_{n} = \left(1-a\right) * {F}_{n - 1} + a * {M}_{n}$
where ***M*ₙ** is a latest measurement result received from the physical layer (e.g., L1-RSRP in the embodiment of the present disclosure), and **n** is an integer greater than or equal to 1; ***F*ₙ** is an updated filtered measurement result (e.g., high layer filtered RSRP in the embodiment of the present disclosure); ***F*ₙ₋₁** is a last filtered measurement result. ***F*₀** is set to M1 (i.e., a first measurement result received from the physical layer); for *MeasObjectNR* (NR measurement object), ***a***=1/2^{(***ki***}/4), where ***kᵢ*** is a filter coefficient of a corresponding measurement quantity of an i-th QuantityConfigNR (NR measurement quantity configuration) in quantityConfigNR-List (NR measurement quantity configuration list); and i is indicated by *quantityConfigInde* (measurement quantity configuration index) in *MeasObjectNR*; for other measurements, ***a*** = 1/2^{(***k***/4)}, where ***k*** is a filter coefficient of a corresponding measurement quantity received for *quantityConfig* (measurement quantity configuration); for universal radio access frequency division duplex (UTRA-FDD) system, ***a***=1/2^{(***k***/4)}, where ***k*** is a filter coefficient of a corresponding measurement quantity received for *quantityConfigUTRA-FDD* (UTRA-FDD measurement quantity configuration) in *QuantityConfig* (measurement quantity configuration).

By replacing the measurement quantity Mn with L1-RSRP, the first RSRP is ***F*ₙ** obtained based on the above formula.

In some embodiments, the first RSRP is an RSRP obtained by performing high layer filtering on multiple L1-RSRPs including the L1-RSRP corresponding to the first signal. In some embodiments, the first RSRP is a high layer filtered RSRP determined by performing high layer filtering on the L1-RSRP corresponding to the first signal, which may be represented by higher layer filtered RSRP. When the first signal is a signal corresponding to a periodic reference signal resource, each transmission corresponding to the periodic reference signal resource can obtain one L1-RSRP, then the UE can determine a higher layer filtered RSRP, i.e., the first RSRP, based on the high layer filtering calculation formula of the previous example.

In some embodiments, the first RSRP is a filtered RSRP determined by performing filtering on calculation results of the L1-RSRP corresponding to the first signal and the pathloss offset and/or RSRP offset indicated by the offset information. In some embodiments, each of the calculation results is a calculation result of an L1-RSRP corresponding to one first signal and a pathloss offset and/or RSRP offset indicated by the offset information, for example, a difference calculation result or a division calculation result of an L1-RSRP corresponding to one first signal and a pathloss offset and/or RSRP offset indicated by the offset information.

In some embodiments, an L1-RSRP for a signal is defined as a linear average of power contributions (in units of [W]) of resource elements carrying the signal. In some embodiments, the unit for RSRP is watts (W). In some embodiments, the unit for RSRP is dB or dBm.

Step 1022: determining a pathloss corresponding to the second signal based on the first RSRP and the offset information.

In some embodiments, the UE determines a pathloss corresponding to the second signal based on the first RSRP, the offset information and a reference power.

The reference power may be indicated by the network device, or may be agreed upon in advance between the UE and the network device (for example, agreed upon through signaling interaction, or agreed upon through a protocol, etc.).

*PL_{b,f,c}*(*q_{d}*) represents the pathloss corresponding to the second signal. Some examples of determining the pathloss corresponding to the second signal transmitted on an activated BWP b on a carrier f in a cell c, are: ${PL}_{b , f , c} \left({q}_{d}\right) = referenceSignalPower - {RSRP}_{1}$
where referenceSignalPower is a reference power, RSRP1 represents an RSRP determined by performing filtering on a plurality of third RSRPs, each of the third RSRPs is a calculation result of an L1-RSRP of one first signal and one pathloss offset/RSRP offset (e.g., a difference or ratio between the L1-RSRP of the first signal and the pathloss offset/RSRP offset). In this example, the offset information indicates a plurality of pathloss offsets and/or a plurality of RSRP offsets, and the first signal includes a plurality of first signals.

*PL_{b,f,c}*(*q_{d}*) represents the pathloss corresponding to the second signal, higher layer filtered RSRP represents the first RSRP, Δ represents the pathloss offset and/or RSRP offset determined by the UE based on the offset information, then some examples of determining a pathloss corresponding to the second signal transmitted on an activated BWP b of a carrier f in a cell c, are: ${PL}_{b , f , c} \left({q}_{d}\right) = referenceSignalPower - higher layer filtered RSRP + Δ ,$ or, ${PL}_{b , f , c} \left({q}_{d}\right) = referenceSignalPower - higher layer filtered RSRP - Δ$

In the above formulas, *q_{d}* is an identifier (index) of the first signal, b is an identifier (index) of the activated BWP, f is an identifier of the carrier, and c is a cell identifier. referenceSignalPower is a reference power indicated to the UE by the network device (such as a base station) through high layer signaling. For example, the base station indicates referenceSignalPower through ss-PBCH-BlockPower or ss-PBCH-BlockPower and powerControlOffsetSS (the default value is 0dB) through high layer signaling, and the UE determines the referenceSignalPower based on the ss-PBCH-BlockPower or ss-PBCH-BlockPower+powerControlOffsetSS sent by the base station through high layer signaling. The higher layer filtered RSRP is an RSRP determined by the UE through high layer filtering based on the L1-RSRP of the reference signal corresponding to *q_{d}* (i.e., the first signal). In some embodiments, the filter configuration of the high layer filtering is indicated by the network device.

In some embodiments, when the UE is not configured to receive periodic CSI-RS, referenceSignalPower is determined by the UE based on ss-PBCH-BlockPower sent by the base station through high-layer signaling. When the UE is configured to receive periodic CSI-RS, referenceSignalPower is determined based on ss-PBCH-BlockPower, or powerControlOffsetSS, where powerControlOffsetSS is used to indicate an offset of a transmission power of CSI-RS relative to a transmission power of SSB. If powerControlOffsetSS is not indicated to the UE, the UE assumes that the value of the offset is 0dB.

In some embodiments, the unit of *PL_{b,f,c}*(*q_{d}*) is dB or dBm.

After determining the pathloss *PL_{b,f,c}*(*q_{d}*) corresponding to the second signal, the UE may further determine a transmission power of the second signal based on a transmission power calculation formula of the second signal.

For example, in the NR system, some examples of determining the transmission power of the second signal based on the pathloss*PL_{b,f,c}*(*q_{d}*) corresponding to the second signal are as follows:

### Example 1:

$\begin{matrix}{P}_{PUSCH , b , f , c} \left(i, j, {q}_{d}, l\right) \\ = min \left\{\begin{matrix}{P}_{CMAX , f , c} \left(i\right) \\ {P}_{O _ PUSCH , b , f , c} \left(j\right) + 10 {log}_{10} \left({2}^{μ}{M}_{RB , b , f , c}^{PUSCH}\left(i\right)\right) + {α}_{b , f , c} \left(j\right) {PL}_{b , f , c} \left({q}_{d}\right) + {Δ}_{TF , b , f , c} \left(i\right) + {f}_{b , f , c} \left(i, l\right)\end{matrix}\right\} \left[dBm\right]\end{matrix}$

The second signal is a PUSCH signal. The method for determining other parameters except *PL_{b,f,c}*(*q_{d}*) in the above formula may refer to some descriptions in 3GPP protocol TS 38.213.

### Example 2:

$\begin{matrix}{P}_{PUCCH , b , f , c} \left(i, {q}_{u}, {q}_{d}, l\right) \\ = min \left\{\begin{matrix}{P}_{CMAX , f , c} \left(i\right) \\ {P}_{O _ PUCCH , b , f , c} \left({q}_{u}\right) + 10 {log}_{10} \left({2}^{μ}{M}_{RB , b , f , c}^{PUSCH}\left(i\right)\right) + {PL}_{b , f , c} \left({q}_{d}\right) + {Δ}_{F _ PUCCH} \left(F\right) + {Δ}_{TF , b , f , c} \left(i\right) + {g}_{b , f , c} \left(i, l\right)\end{matrix}\right\} \left[dBm\right]\end{matrix}$

The second signal is a PUCCH signal. The method for determining other parameters except *PL_{b,f,c}*(*q_{d}*) in the above formula may refer to some descriptions in 3GPP protocol TS 38.213.

### Example 3:

$\begin{matrix}{P}_{SRS , b , f , c} \left(i, {q}_{s}, l\right) \\ = min \left\{\begin{matrix}{P}_{CMAX , f , c} \left(i\right) \\ {P}_{O _ SRS , b , f , c} \left({q}_{s}\right) + 10 {log}_{10} \left({2}^{μ}{M}_{SRS , b , f , c}\left(i\right)\right) + {α}_{SRS , b , f , c} \left({q}_{s}\right) {PL}_{b , f , c} \left({q}_{d}\right) + {h}_{b , f , c} \left(i, l\right)\end{matrix}\right\} \left[dBm\right]\end{matrix}$

The second signal is an SRS, and the method for determining other parameters except *PL_{b,f,c}*(*q_{d}*) in the above formula can refer to some descriptions in 3GPP protocol TS 38.213.

### Example 4:

${P}_{PRACH , b , f , c} \left(i\right) = min \left\{{P}_{CMAX , f , c}\left(i\right),{P}_{PRACH , t arg et , f , c}+{PL}_{b , f , c}\left({q}_{d}\right)\right\} \left[dBm\right]$

The second signal is PRACH, and the method for determining other parameters except *PL_{b,f,c}*(*q_{d}*) in the above formula can refer to some descriptions in 3GPP protocol TS 38.213.

In some embodiments, the offset information includes pathloss offset information and/or RSRP offset information. The pathloss offset information is used to indicate/determine a pathloss offset. The RSRP offset information is used to indicate/determine an RSRP offset. Then, the UE can determine the pathloss offset and/or RSRP offset based on the offset information.

In some embodiments, the pathloss offset is an offset between a pathloss corresponding to the second signal and a pathloss corresponding to the first signal.

In some embodiments, an offset between the pathloss corresponding to the second signal and the pathloss corresponding to the first signal is the offset of the pathloss corresponding to the second signal (i.e., a pathloss used for determining the transmission power of the second signal) relative to the pathloss corresponding to the first signal (i.e., a pathloss determined based on the first signal). In some embodiments, an offset between the pathloss corresponding to the second signal and the pathloss corresponding to the first signal is an offset of the pathloss corresponding to the first signal relative to the pathloss corresponding to the second signal.

In some embodiments, an offset between the pathloss corresponding to the second signal and the pathloss corresponding to the first signal is a difference between the pathloss corresponding to the second signal and the pathloss corresponding to the first signal. The difference may be a linear value or dB value. In some embodiments, the offset between the pathloss corresponding to the second signal and the pathloss corresponding to the first signal is a ratio between the pathloss corresponding to the second signal and the pathloss corresponding to the first signal. The ratio may be a linear value or dB value.

In some embodiments, the RSRP offset includes one or more of the following:
an offset between an RSRP corresponding to a second TRP and an RSRP corresponding to a first TRP, where the first TRP is a TRP corresponding to the first signal and the second TRP is a TRP corresponding to the second signal;
an offset between an RSRP corresponding to a second control resource set pool index and an RSRP corresponding to a first control resource set pool index, where the first control resource set pool index is a control resource set pool index corresponding to the first signal, and the second control resource set pool index is a control resource set pool index corresponding to the second signal;
an offset between an RSRP corresponding to a second TCI state and an RSRP corresponding to a first TCI state, where the first TCI state is a TCI state corresponding to the first signal, and the second TCI state is a TCI state corresponding to the second signal;
an offset between an RSRP corresponding to a second cell and an RSRP corresponding to a first cell, where the first cell is a cell corresponding to the first signal, and the second cell is a cell corresponding to the second signal;
an offset between an RSRP corresponding to a second SRS resource set and an RSRP corresponding to a first SRS resource set, where the first SRS resource set is an SRS resource set corresponding to the first signal, and the second SRS resource set is an SRS resource set corresponding to the second signal;
an offset between an RSRP corresponding to a second carrier and an RSRP corresponding to a first carrier, where the first carrier is a carrier corresponding to the first signal, and the second carrier is a carrier corresponding to the second signal; or
an offset between an RSRP corresponding to a second beam and an RSRP corresponding to a first beam, where the first beam is a beam corresponding to the first signal, and the second beam is a beam corresponding to the second signal.

In some embodiments, the offset between the RSRP corresponding to the second TRP and the RSRP corresponding to the first TRP is an offset of the RSRP corresponding to the second TRP relative to the RSRP corresponding to the first TRP. In some embodiments, the offset between the RSRP corresponding to the second TRP and the RSRP corresponding to the first TRP is an offset of the RSRP corresponding to the first TRP relative to the RSRP corresponding to the second TRP.

In some embodiments, the offset between the RSRP corresponding to the second TRP and the RSRP corresponding to the first TRP is a difference between the RSRP corresponding to the second TRP and the RSRP corresponding to the first TRP. The difference may be a linear value or a dB value. In some embodiments, the offset between the RSRP corresponding to the second TRP and the RSRP corresponding to the first TRP is a ratio between the RSRP corresponding to the second TRP and the RSRP corresponding to the first TRP. The ratio may be a linear value or a dB value.

In some embodiments, the offset between the RSRP corresponding to the second TRP and the RSRP corresponding to the first TRP can be understood as an offset between an RSRP of a transmission signal corresponding to the second TRP and an RSRP of a transmission signal corresponding to the first TRP. As a possible embodiment, the offset between the RSRP corresponding to the second TRP and the RSRP corresponding to the first TRP is an offset value between an RSRP of a signal on the same uplink reference signal resource at the second TRP and its RSRP at the first TRP, such as an offset of an RSRP measured at the first TRP relative to an RSRP measured at the second TRP for the same SRS resource. As another possible embodiment, the offset between the RSRP corresponding to the second TRP and the RSRP corresponding to the first TRP is an offset value between RSRPs of two different uplink reference signal resources/uplink reference signals, which correspond to the second TRP and the first TRP respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second TRP and the RSRP corresponding to the first TRP is an offset between an RSRP of the signal corresponding to the first SRS resource measured at the first TRP and an RSRP of the signal corresponding to the second SRS resource measured at the second TRP.

In some embodiments, the offset between the RSRP corresponding to the second control resource set pool index CORESETPoolIndex and the RSRP corresponding to the first CORESETPoolIndex is an offset of the RSRP corresponding to the second CORESETPoolIndex relative to the RSRP corresponding to the first CORESETPoolIndex. In some embodiments, the offset between the RSRP corresponding to the second CORESETPoolIndex and the RSRP corresponding to the first CORESETPoolIndex is an offset of the RSRP corresponding to the first CORESETPoolIndex relative to the RSRP corresponding to the second CORESETPoolIndex.

In some embodiments, the offset between the RSRP corresponding to the second CORESETPoolIndex and the RSRP corresponding to the first CORESETPoolIndex is a difference between the RSRP corresponding to the second CORESETPoolIndex and the RSRP corresponding to the first CORESETPoolIndex. The difference may be a linear value or a dB value. In some embodiments, the offset between the RSRP corresponding to the second CORESETPoolIndex and the RSRP corresponding to the first CORESETPoolIndex is a ratio between the RSRP corresponding to the second CORESETPoolIndex and the RSRP corresponding to the first CORESETPoolIndex. The ratio may be a linear value or a dB value.

In some embodiments, the offset between the RSRP corresponding to the second CORESETPoolIndex and the RSRP corresponding to the first CORESETPoolIndex can be understood as an offset of an RSRP of a transmission signal corresponding to the second CORESETPoolIndex relative to an RSRP of a transmission signal corresponding to the first CORESETPoolIndex. As a possible embodiment, the offset between the RSRP corresponding to the second CORESETPoolIndex and the RSRP corresponding to the first CORESETPoolIndex is an offset value between RSRPs of two different uplink reference signal resources/uplink reference signals, which correspond to the second CORESETPoolIndex and the first CORESETPoolIndex respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second CORESETPoolIndex and the RSRP corresponding to the first CORESETPoolIndex is an offset between an RSRP of the signal corresponding to the first SRS resource measured at the first TRP and an RSRP of the signal corresponding to the second SRS resource measured at the second TRP. The first SRS resource is taken from resources in the first CORESETPoolIndex, and the second SRS resource is taken from resources in the second CORESETPoolIndex.

In some embodiments, the offset between the RSRP corresponding to the second TCI state and the RSRP corresponding to the first TCI state is an offset of the RSRP corresponding to the second TCI state relative to the RSRP corresponding to the first TCI state. In some embodiments, the offset between the RSRP corresponding to the second TCI state and the RSRP corresponding to the first TCI state is an offset of the RSRP corresponding to the first TCI state relative to the RSRP corresponding to the second TCI state.

In some embodiments, the offset between the RSRP corresponding to the second TCI state and the RSRP corresponding to the first TCI state is a difference between the RSRP corresponding to the second TCI state and the RSRP corresponding to the first TCI state. The difference may be a linear value or dB value. In some embodiments, the offset between the RSRP corresponding to the second TCI state and the RSRP corresponding to the first TCI state is a ratio between the RSRP corresponding to the second TCI state and the RSRP corresponding to the first TCI state. The ratio may be a linear value or dB value.

In some embodiments, the offset between the RSRP corresponding to the second TCI state and the RSRP corresponding to the first TCI state can be understood as an offset between an RSRP of a transmission signal corresponding to the second TCI state and an RSRP of a transmission signal corresponding to the first TCI state. As a possible embodiment, the offset between the RSRP corresponding to the second TCI state and the RSRP corresponding to the first TCI state is an offset value between RSRPs of two different uplink reference signal resources/uplink reference signals, which correspond to the second TCI state and the first TCI state respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second TCI state and the RSRP corresponding to the first TCI state is an offset value between an RSRP of a signal corresponding to the first SRS resource measured in the first TRP and an RSRP of a signal corresponding to the second SRS resource measured in the second TRP. A TCI state, which corresponds to the signal corresponding to the first SRS resource, is the first TCI state; and a TCI state, which corresponds to the signal corresponding to the second SRS resource, is the second TCI state.

In some embodiments, the offset between the RSRP corresponding to the second cell and the RSRP corresponding to the first cell is an offset of the RSRP corresponding to the second cell relative to the RSRP corresponding to the first cell. In some embodiments, the offset between the RSRP corresponding to the second cell and the RSRP corresponding to the first cell is an offset of the RSRP corresponding to the first cell relative to the RSRP corresponding to the second cell.

In some embodiments, the offset between the RSRP corresponding to the second cell and the RSRP corresponding to the first cell is a difference between the RSRP corresponding to the second cell and the RSRP corresponding to the first cell. The difference may be a linear value or dB value. In some embodiments, the offset between the RSRP corresponding to the second cell and the RSRP corresponding to the first cell is a ratio between the RSRP corresponding to the second cell and the RSRP corresponding to the first cell. The difference may be a linear value or dB value.

In some embodiments, the offset between the RSRP corresponding to the second cell and the RSRP corresponding to the first cell can be understood as an offset between an RSRP of a transmission signal corresponding to the second cell and an RSRP of a transmission signal corresponding to the first cell. As a possible embodiment, the offset between the RSRP corresponding to the second cell and the RSRP corresponding to the first cell is an offset value between RSRPs of two different uplink reference signal resources/uplink reference signals, which correspond to the second cell and the first cell respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second cell and the RSRP corresponding to the first cell is an offset value between an RSRP of a signal corresponding to the first SRS resource measured at the first TRP and an RSRP of a signal corresponding to the second SRS resource measured at the second TRP. The first SRS resource corresponds to the first cell, and the second SRS resource corresponds to the second cell.

In some embodiments, the offset between the RSRP corresponding to the second SRS resource set and the RSRP corresponding to the first SRS resource set is an offset of the RSRP corresponding to the second SRS resource set relative to the RSRP corresponding to the first SRS resource set. The offset between the RSRP corresponding to the second SRS resource set and the RSRP corresponding to the first SRS resource set is an offset of the RSRP corresponding to the first SRS resource set relative to the RSRP corresponding to the second SRS resource set.

In some embodiments, the offset between the RSRP corresponding to the second SRS resource set and the RSRP corresponding to the first SRS resource set is a difference between the RSRP corresponding to the second SRS resource set and the RSRP corresponding to the first SRS resource set. The difference is a linear value or dB value. In some embodiments, the offset between the RSRP corresponding to the second SRS resource set and the RSRP corresponding to the first SRS resource set is a ratio between the RSRP corresponding to the second SRS resource set and the RSRP corresponding to the first SRS resource set. The ratio is a linear value or dB value.

In some embodiments, the offset between the RSRP corresponding to the second SRS resource set and the RSRP corresponding to the first SRS resource set can be understood as an offset between an RSRP of a transmission signal corresponding to the second SRS resource set and an RSRP of a transmission signal corresponding to the first SRS resource set. As a possible embodiment, the offset between the RSRP corresponding to the second SRS resource set and the RSRP corresponding to the first SRS resource set is an offset value between RSRPs of two different uplink reference signal resources/uplink reference signals, which correspond to the second SRS resource set and the first SRS resource set respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second SRS resource set and the RSRP corresponding to the first SRS resource set is an offset value between an RSRP of a signal corresponding to the first SRS resource measured at the first TRP and an RSRP of a signal corresponding to the second SRS resource measured at the second TRP. The first SRS resource is taken from the first SRS resource set, and the second SRS resource is taken from the second SRS resource set.

In some embodiments, the offset between the RSRP corresponding to the second carrier and the RSRP corresponding to the first carrier is an offset of the RSRP corresponding to the second carrier relative to the RSRP corresponding to the first carrier. In some embodiments, the offset between the RSRP corresponding to the second carrier and the RSRP corresponding to the first carrier is an offset of the RSRP corresponding to the first carrier relative to the RSRP corresponding to the second carrier.

In some embodiments, the offset between the RSRP corresponding to the second carrier and the RSRP corresponding to the first carrier is a difference between the RSRP corresponding to the second carrier and the RSRP corresponding to the first carrier. The difference may be a linear value or dB value. The offset between the RSRP corresponding to the second carrier and the RSRP corresponding to the first carrier is a ratio between the RSRP corresponding to the second carrier and the RSRP corresponding to the first carrier. The ratio may be a linear value or dB value.

In some embodiments, the offset between the RSRP corresponding to the second carrier and the RSRP corresponding to the first carrier can be understood as an offset between an RSRP of a transmission signal corresponding to the second carrier and an RSRP of a transmission signal corresponding to the first carrier. As a possible embodiment, the offset between the RSRP corresponding to the second carrier and the RSRP corresponding to the first carrier is an offset value between RSRPs of two different uplink reference signal resources/uplink reference signals, which correspond to the second carrier and the first carrier respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second carrier and the RSRP corresponding to the first carrier is an offset value between an RSRP of a signal corresponding to the first SRS resource measured at the first TRP and an RSRP of a signal corresponding to the second SRS resource measured at the second TRP. The signal corresponding to the first SRS resource is transmitted to the first TRP through the first carrier, and the signal corresponding to the second SRS resource is transmitted to the second TRP through the second carrier.

In some embodiments, the offset between the RSRP corresponding to the second beam and the RSRP corresponding to the first beam is an offset of the RSRP corresponding to the second beam relative to the RSRP corresponding to the first beam. In some embodiments, the offset between the RSRP corresponding to the second beam and the RSRP corresponding to the first beam is an offset of the RSRP corresponding to the first beam relative to the RSRP corresponding to the second beam.

In some embodiments, the offset between the RSRP corresponding to the second beam and the RSRP corresponding to the first beam is a difference between the RSRP corresponding to the second beam and the RSRP corresponding to the first beam. The difference may be a linear value or dB value. In some embodiments, the offset between the RSRP corresponding to the second beam and the RSRP corresponding to the first beam is a ratio between the RSRP corresponding to the second beam and the RSRP corresponding to the first beam. The ratio is a linear value or dB value.

In some embodiments, the offset between the RSRP corresponding to the second beam and the RSRP corresponding to the first beam can be understood as an offset between an RSRP of a transmission signal corresponding to the second beam and an RSRP of a transmission signal corresponding to the first beam. As a possible embodiment, the offset between the RSRP corresponding to the second beam and the RSRP corresponding to the first beam is an offset value between RSRPs of two different uplink reference signal resources/uplink reference signals, which correspond to the second beam and the first beam respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second beam and the RSRP corresponding to the first beam is an offset value between an RSRP of a signal corresponding to the first SRS resource measured at the first TRP and an RSRP of a signal corresponding to the second SRS resource measured at the second TRP. The signal corresponding to the first SRS resource is transmitted to the first TRP through the first beam; the signal corresponding to the second SRS resource is transmitted to the second TRP through the second beam.

In some embodiments, the offset information includes multiple pieces of pathloss offset information and/or multiple pieces of RSRP offset information.

In some embodiments, the multiple pieces of pathloss offset information have corresponding relationship with the second RSRP, and/or the multiple pieces of pathloss offset information have corresponding relationship with the first signal. The second RSRP is used to determine the first RSRP. In some embodiments, the second RSRP is an L1-RSRP of the first signal, and the first RSRP is an RSRP (e.g., high layer filtered RSRP) obtained by filtering multiple L1-RSRPs including the second RSRP.

In some embodiments, the corresponding relationship between the multiple pieces of pathloss offset information and the second RSRP is that each pathloss offset information corresponds to one second RSRP. In some embodiments, the corresponding relationship between the multiple pieces of pathloss offset information and the second RSRP is a one-to-one correspondence. That is, multiple second RSRPs correspond to the multiple pieces of pathloss offset information in a one-to-one manner. In this case, the UE can determine a power adjustment value for each second RSRP based on its corresponding pathloss offset value, and can better determine the transmission power of the second signal.

In some embodiments, the corresponding relationship between the multiple pieces of pathloss offset information and the first signal is that each of multiple pieces of pathloss offset information corresponds to one first signal. In some embodiments, the corresponding relationship between the multiple pieces of pathloss offset information and the first signal is a one-to-one correspondence, that is, the multiple pieces of pathloss offset information domains correspond to the multiple first signals in a one-to-one manner. In this case, the UE can determine a power adjustment value for each first signal based on its corresponding pathloss offset value, and can better determine the transmission power of the second signal.

In some embodiments, the multiple pieces of RSRP offset information have corresponding relationship with the second RSRP, and/or the multiple pieces of RSRP offset information have corresponding relationship with the first signal.

In some embodiments, the corresponding relationship between the multiple pieces of RSRP offset information and the second RSRP is that each RSRP offset information corresponds to one second RSRP. In some embodiments, the corresponding relationship between the multiple pieces of RSRP offset information and the second RSRP is a one-to-one correspondence. That is, the multiple second RSRPs correspond to the multiple pieces of RSRP offset information in a one-to-one manner. In this case, the UE can determine an adjusted RSRP value for each second RSRP based on its corresponding RSRP offset information, and can better determine the transmission power of the second signal.

In some embodiments, the corresponding relationship between the multiple pieces of RSRP offset information and the first signal is that each RSRP offset information corresponds to one first signal. In some embodiments, the corresponding relationship between the multiple pieces of RSRP offset information and the first signal is a one-to-one correspondence, that is, the multiple pieces of RSRP offset information correspond to the multiple first signals in a one-to-one manner. In this case, the UE can determine an adjusted RSRP value for each first signal based on its corresponding RSRP offset value, and can better determine the transmission power of the second signal.

In some embodiments, the number of pieces of pathloss offset information is equal to the number of second RSRPs used to determine the first RSRP. In this case, the network device transmits one piece of corresponding pathloss offset information for each second RSRP.

In some embodiments, the number of pieces of pathloss offset information is less than the number of second RSRPs used to determine the first RSRP. At this point, the network device transmits corresponding pathloss offset information only for part of the second RSRPs, or multiple second RSRPs share the same pathloss offset information. This can save the overhead of pathloss offset information. For example, one piece of pathloss offset information transmitted by the network device can be applicable for a period of time; during this period of time, the UE can determine a high layer filtered RSRP (first RSRP) based on multiple second RSRPs which are corresponding to the same pathloss offset information.

In some optional embodiments, in the above step 102, the determining a pathloss corresponding to a second signal based on the first signal and the offset information, may specifically include:
determining a pathloss offset based on filtering offset values corresponding to multiple pieces of pathloss offset information included in the offset information;
determining the pathloss corresponding to the second signal based on the first RSRP and the pathloss offset.

In some embodiments, after the pathloss offset Δ is obtained through the above filtering, the pathloss corresponding to the second signal may be determined based on a reference power, the first RSRP and the pathloss offset, i.e., determining the pathloss corresponding to the second signal based on the following formula: referenceSignalPower-higher layer filtered RSRP+Δ, or referenceSignalPower-higher layer filtered RSRP-Δ. Then, the transmission power of the second signal is determined based on the pathloss corresponding to the second signal.

In some optional embodiments, in the above step 102, the determining a pathloss corresponding to a second signal based on the first signal and the offset information, may specifically include:
determining an RSRP offset based on filtering offset values corresponding to multiple pieces of RSRP offset information included in the offset information;
determining the pathloss corresponding to the second signal based on the first RSRP and the RSRP offset.

In some embodiments, after obtaining the RSRP offset Δ*_{RSRP}* through the above filtering, some examples of calculating the pathloss corresponding to the second signal are: ${PL}_{b , f , c} \left({q}_{d}\right) = referenceSignalPower - \left(higher layer filtered RSRP+{Δ}_{RSRP}\right) ,$ or, ${PL}_{b , f , c} \left({q}_{d}\right) = referenceSignalPower - \left(higher layer filtered RSRP-{Δ}_{RSRP}\right) ,$ where *PL_{b,f,c}*(*q_{d}*) represents the pathloss corresponding to the second signal.

In some optional embodiments, in the above step 103, the determining a pathloss corresponding to the first signal based on the first signal, specifically includes:
Step 1031: determining a first RSRP based on the first signal.

In some embodiments, the first RSRP is a RSRP obtained after filtering the layer 1 (i.e., physical layer) reference signal receiving power L1-RSRP. The filtering includes high layer filtering, or a method of filtering multiple measurement quantities by using some filter coefficients, etc., for example, in order to obtain an average value for multiple measurement quantities (or multiple numerical values), where the average value can be a linear average value, a weighted average value, or another type of average value. One method of performing high layer filtering on a measurement quantity Mn (replacing Mn with L1-RSRP is to perform filtering on L1-RSRP) is as follows: ${F}_{n} = \left(1-a\right) * {F}_{n - 1} + a * {M}_{n}$
where ***M*ₙ** is a latest measurement result received from the physical layer (e.g., L1-RSRP in the embodiment of the present disclosure), and **n** is an integer greater than or equal to 1; ***F*ₙ** is an updated filtered measurement result (e.g., high layer filtered RSRP in the embodiment of the present disclosure); ***F*ₙ₋₁** is a last filtered measurement result. ***F*₀** is set to M1 (i.e., a first measurement result received from the physical layer); for *MeasObjectNR* (NR measurement object), ***a***=1/2^{(***ki***}/4), where ***kᵢ*** is a filter coefficient of a corresponding measurement quantity of an i-th QuantityConfigNR (NR measurement quantity configuration) in quantityConfigNR-List (NR measurement quantity configuration list); and i is indicated by *quantityConfigInde* (measurement quantity configuration index) in *MeasObjectNR*; for other measurements, ***a*** = 1/2^{(***k***/4)}, where ***k*** is a filter coefficient of a corresponding measurement quantity received for *quantityConfig* (measurement quantity configuration); for universal radio access frequency division duplex (UTRA-FDD) system, ***a***=1/2^{(***k***/4)}, where ***k*** is a filter coefficient of a corresponding measurement quantity received for *quantityConfigUTRA-FDD* (UTRA-FDD measurement quantity configuration) in *QuantityConfig* (measurement quantity configuration).

By replacing the measurement quantity Mn with L1-RSRP, the first RSRP is ***F*ₙ** obtained based on the above formula.

In some embodiments, the first RSRP is an RSRP obtained by performing high layer filtering on multiple L1-RSRPs including the L1-RSRP corresponding to the first signal. In some embodiments, the first RSRP is a high layer filtered RSRP obtained by performing high layer filtering on the L1-RSRP corresponding to the first signal, which may be represented by higher layer filtered RSRP. When the first signal is a signal corresponding to a periodic reference signal resource, each transmission corresponding to the periodic reference signal resource can obtain one L1-RSRP, then the UE can determine a higher layer filtered RSRP, i.e., the first RSRP, based on the high layer filtering calculation formula of the previous example.

In some embodiments, an L1-RSRP for a signal is defined as a linear average of power contributions (in units of [W]) of resource elements carrying the signal. In some embodiments, the unit for RSRP is watts (W). In some embodiments, the unit for RSRP is dB or dBm.

Step 1032: determining a pathloss corresponding to the first signal based on the first RSRP and a reference power; where the reference power may be indicated by the network device, or pre-agreed between the UE and the network device (e.g., agreed upon through signaling interaction, or agreed upon through a protocol, etc.).

In some embodiments, the pathloss corresponding to the first signal is a pathloss determined based on the RSRP of the first signal. In some embodiments, the pathloss corresponding to the first signal is a pathloss determined based on the L1-RSRP of the first signal. In some embodiments, the pathloss corresponding to the first signal is a pathloss determined based on the high-layer filtered RSRP of the first signal.

*PL_{b,f,c}*(*q_{d}*) represents the pathloss corresponding to the first signal, and one determination method is: *PL_{b,f,c}*(*q_{d}*)=referenceSignalPower-higher layer filtered RSRP . That is, the pathloss corresponding to the first signal is a difference between the reference power and the first RSRP.

As an example, the UE determines an offset value Δ (pathloss offset and/or RSRP offset) based on the offset information, and the pathloss corresponding to the first signal is *PL_{b,f,c}*(*q_{d}*) , then the pathloss corresponding to the second signal is *PL_{b,f,c}*(*q_{d}*)+Δ (that is, when calculating the transmission power of the second signal, the original *PL_{b,f,c}*(*q_{d}*) can be replaced by *PL_{b,f,c}*(*q_{d}*)+Δ in the calculation formula for calculating the transmission power of the second signal), or, the pathloss corresponding to the second signal is *PL_{b,f,c}*(*q_{d}*)-Δ (that is, when calculating the transmission power of the second signal, the original *PL_{b,f,c}*(*q_{d}*) can be replaced by *PL_{b,f,c}*(*q_{d}*)-Δ in the calculation formula for calculating the transmission power of the second signal).

In the above embodiments, the pathloss corresponding to the second signal may be understood as a pathloss used to determine the transmission power of the second signal.

After determining the pathloss *PL_{b,f,c}*(*q_{d}*) corresponding to the first signal, the UE may further determine the transmission power of the second signal based on a transmission power calculation formula of the second signal.

For example, in the NR system, some examples of determining the transmission power of the second signal based on the pathloss*PL_{b,f,c}*(*q_{d}*) corresponding to the first signal are as follows:

### Example 1

$\begin{matrix}{P}_{PUSCH , b , f , c} \left(i, j, {q}_{d}, l\right) \\ = min \left\{\begin{matrix}{P}_{CMAX , f , c} \left(i\right) \\ {P}_{O _ PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) \left({PL}_{b , f , c}\left({q}_{d}\right)+Δ\right) + {Δ}_{TF , b , f , c} \left(i\right) + {f}_{b , f , c} \left(i, l\right)\end{matrix}\right\} \left[dBm\right]\end{matrix}$

The first signal is a PUSCH signal. The method for determining other parameters except *PL_{b,f,c}*(*q_{d}*) in the above formula may refer to some descriptions in 3GPP protocol TS 38.213.

### Example 2

$\begin{matrix}{P}_{PUSCH , b , f , c} \left(i, j, {q}_{d}, l\right) \\ = min \left\{\begin{matrix}{P}_{CMAX , f , c} \left(i\right) \\ {P}_{O _ PUSCH , b , f , c} \left(j\right) + 10 {log}_{10} \left({2}^{μ}{M}_{RB , b , f , c}^{PUSCH}\left(i\right)\right) + {α}_{b , f , c} \left(j\right) \left({PL}_{b , f , c}\left({q}_{d}\right)-Δ\right) + {Δ}_{TF , b , f , c} \left(i\right) + {f}_{b , f , c} \left(i, l\right)\end{matrix}\right\} \left[dBm\right]\end{matrix}$

The first signal is a PUSCH signal. The method for determining other parameters except *PL_{b,f,c}*(*q_{d}*) in the above formula may refer to some descriptions in 3GPP protocol TS 38.213.

### Example 3

$\begin{matrix}{P}_{SRS , b , f , c} \left(i, j, {q}_{d}, l\right) \\ = min \left\{\begin{matrix}{P}_{CMAX , f , c} \left(i\right) \\ {P}_{O _ SRS , b , f , c} \left(j\right) + 10 {log}_{10} \left({2}^{μ}{M}_{SRS , b , f , c}\left(i\right)\right) + {α}_{SRS , b , f , c} \left(j\right) \left({PL}_{b , f , c}\left({q}_{d}\right)+Δ\right) + {h}_{b , f , c} \left(i, l\right)\end{matrix}\right\} \left[dBm\right]\end{matrix}$

The first signal is an SRS signal. The method for determining other parameters except *PL_{b,f,c}*(*q_{d}*) in the above formula may refer to some descriptions in 3GPP protocol TS 38.213.

### Example 4

$\begin{matrix}{P}_{SRS , b , f , c} \left(i, j, {q}_{d}, l\right) \\ = min \left\{\begin{matrix}{P}_{CMAX , f , c} \left(i\right) \\ {P}_{O _ SRS , b , f , c} \left(j\right) + 10 {log}_{10} \left({2}^{μ}{M}_{SRS , b , f , c}\left(i\right)\right) + {α}_{SRS , b , f , c} \left(j\right) \left({PL}_{b , f , c}\left({q}_{d}\right)-Δ\right) + {h}_{b , f , c} \left(i, l\right)\end{matrix}\right\} \left[dBm\right]\end{matrix}$

The first signal is an SRS signal. The method for determining other parameters except *PL_{b,f,c}*(*q_{d}*) in the above formula may refer to some descriptions in 3GPP protocol TS 38.213.

### Example 5

${P}_{PRACH , b , f , c} \left(i\right) = min \left\{{P}_{CMAX , f , c}\left(i\right),{P}_{PRACH , t arg et , f , c}+{PL}_{b , f , c}\left({q}_{d}\right)+Δ\right\} \left[dBm\right]$

The first signal is PRACH, and the determination method of other parameters except *PL_{b,f,c}*(*q_{d}*) in the above formula can refer to some descriptions in 3GPP protocol TS 38.213.

### Example 6

${P}_{PRACH , b , f , c} \left(i\right) = min \left\{{P}_{CMAX , f , c}\left(i\right),{P}_{PRACH , t arg et , f , c}+{PL}_{b , f , c}\left({q}_{d}\right)-Δ\right\} \left[dBm\right]$

The first signal is PRACH, and the determination method of other parameters except *PL_{b,f,c}*(*q_{d}*) in the above formula can refer to some descriptions in 3GPP protocol TS 38.213.

In some embodiments, the offset information includes pathloss offset information and/or RSRP offset information. The pathloss offset information is used to indicate/determine the pathloss offset, and the RSRP offset information is used to indicate/determine the RSRP offset. Then, the UE can determine the pathloss offset and/or RSRP offset based on the offset information.

In some embodiments, the pathloss offset is an offset between a pathloss corresponding to the second signal and a pathloss corresponding to the first signal.

In some embodiments, the offset between the pathloss corresponding to the second signal and the pathloss corresponding to the first signal is an offset of the pathloss corresponding to the second signal (i.e., a pathloss used to determine the transmission power of the second signal) relative to the pathloss corresponding to the first signal (i.e., a pathloss determined based on the first signal). In some embodiments, the offset between the pathloss corresponding to the second signal and the pathloss corresponding to the first signal is an offset of the pathloss corresponding to the first signal relative to the pathloss corresponding to the second signal.

In some embodiments, the offset between the pathloss corresponding to the second signal and the pathloss corresponding to the first signal is a difference between the pathloss corresponding to the second signal and the pathloss corresponding to the first signal. The difference may be a linear value or dB value. In some embodiments, the offset between the pathloss corresponding to the second signal and the pathloss corresponding to the first signal is a ratio between the pathloss corresponding to the second signal and the pathloss corresponding to the first signal. The ratio may be a linear value or dB value.

In some embodiments, the RSRP offset includes one or more of the following:
an offset between an RSRP corresponding to a second TRP and an RSRP corresponding to a first TRP, where the first TRP is a TRP corresponding to the first signal and the second TRP is a TRP corresponding to the second signal;
an offset between an RSRP corresponding to a second control resource set pool index and an RSRP corresponding to a first control resource set pool index, where the first control resource set pool index is a control resource set pool index corresponding to the first signal, and the second control resource set pool index is a control resource set pool index corresponding to the second signal;
an offset between an RSRP corresponding to a second TCI state and an RSRP corresponding to a first TCI state, where the first TCI state is a TCI state corresponding to the first signal, and the second TCI state is a TCI state corresponding to the second signal;
an offset between an RSRP corresponding to a second cell and an RSRP corresponding to a first cell, where the first cell is a cell corresponding to the first signal, and the second cell is a cell corresponding to the second signal;
an offset between an RSRP corresponding to a second SRS resource set and an RSRP corresponding to a first SRS resource set, where the first SRS resource set is an SRS resource set corresponding to the first signal, and the second SRS resource set is an SRS resource set corresponding to the second signal;
an offset between an RSRP corresponding to a second carrier and an RSRP corresponding to a first carrier, where the first carrier is a carrier corresponding to the first signal, and the second carrier is a carrier corresponding to the second signal; or
an offset between an RSRP corresponding to a second beam and an RSRP corresponding to a first beam, where the first beam is a beam corresponding to the first signal, and the second beam is a beam corresponding to the second signal.

In some embodiments, the offset between the RSRP corresponding to the second TRP and the RSRP corresponding to the first TRP is an offset of the RSRP corresponding to the second TRP relative to the RSRP corresponding to the first TRP. In some embodiments, the offset between the RSRP corresponding to the second TRP and the RSRP corresponding to the first TRP is an offset of the RSRP corresponding to the first TRP relative to the RSRP corresponding to the second TRP.

In some embodiments, the offset between the RSRP corresponding to the second TRP and the RSRP corresponding to the first TRP is a difference between the RSRP corresponding to the second TRP and the RSRP corresponding to the first TRP. The difference may be a linear value or dB value. In some embodiments, the offset between the RSRP corresponding to the second TRP and the RSRP corresponding to the first TRP is a ratio between the RSRP corresponding to the second TRP and the RSRP corresponding to the first TRP. The ratio may be a linear value or dB value.

In some embodiments, the offset between the RSRP corresponding to the second TRP and the RSRP corresponding to the first TRP can be understood as an offset between an RSRP of a transmission signal corresponding to the second TRP and an RSRP of a transmission signal corresponding to the first TRP. As a possible embodiment, the offset between the RSRP corresponding to the second TRP and the RSRP corresponding to the first TRP is an offset value between an RSRP of a signal on the same uplink reference signal resource at the second TRP and its RSRP at the first TRP, such as an offset of an RSRP measured at the first TRP relative to an RSRP measured at the second TRP for the same SRS resource. As another possible embodiment, the offset between the RSRP corresponding to the second TRP and the RSRP corresponding to the first TRP is an offset value between RSRPs of two different uplink reference signal resources/uplink reference signals, which correspond to the second TRP and the first TRP respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second TRP and the RSRP corresponding to the first TRP is an offset between an RSRP of the signal corresponding to the first SRS resource measured at the first TRP and an RSRP of the signal corresponding to the second SRS resource measured at the second TRP.

In some embodiments, the offset between the RSRP corresponding to the second control resource set pool index CORESETPoolIndex and the RSRP corresponding to the first CORESETPoolIndex is an offset of the RSRP corresponding to the second CORESETPoolIndex relative to the RSRP corresponding to the first CORESETPoolIndex. In some embodiments, the offset between the RSRP corresponding to the second CORESETPoolIndex and the RSRP corresponding to the first CORESETPoolIndex is an offset of the RSRP corresponding to the first CORESETPoolIndex relative to the RSRP corresponding to the second CORESETPoolIndex.

In some embodiments, the offset between the RSRP corresponding to the second CORESETPoolIndex and the RSRP corresponding to the first CORESETPoolIndex is a difference between the RSRP corresponding to the second CORESETPoolIndex and the RSRP corresponding to the first CORESETPoolIndex. The difference may be a linear value or dB value. In some embodiments, the offset between the RSRP corresponding to the second CORESETPoolIndex and the RSRP corresponding to the first CORESETPoolIndex is a ratio between the RSRP corresponding to the second CORESETPoolIndex and the RSRP corresponding to the first CORESETPoolIndex. The ratio may be a linear value or dB value.

In some embodiments, the offset between the RSRP corresponding to the second CORESETPoolIndex and the RSRP corresponding to the first CORESETPoolIndex can be understood as an offset of an RSRP of a transmission signal corresponding to the second CORESETPoolIndex relative to an RSRP of a transmission signal corresponding to the first CORESETPoolIndex. As a possible embodiment, the offset between the RSRP corresponding to the second CORESETPoolIndex and the RSRP corresponding to the first CORESETPoolIndex is an offset value between RSRPs of two different uplink reference signal resources/uplink reference signals, which correspond to the second CORESETPoolIndex and the first CORESETPoolIndex, respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second CORESETPoolIndex and the RSRP corresponding to the first CORESETPoolIndex is an offset value between an RSRP of a signal corresponding to the first SRS resource measured at the first TRP and an RSRP of a signal corresponding to the second SRS resource measured at the second TRP. The first SRS resource is taken from resources in the first CORESETPoolIndex, and the second SRS resource is taken from resources in the second CORESETPoolIndex.

In some embodiments, the offset between the RSRP corresponding to the second TCI state and the RSRP corresponding to the first TCI state is an offset of the RSRP corresponding to the second TCI state relative to the RSRP corresponding to the first TCI state. In some embodiments, the offset between the RSRP corresponding to the second TCI state and the RSRP corresponding to the first TCI state is an offset of the RSRP corresponding to the first TCI state relative to the RSRP corresponding to the second TCI state.

In some embodiments, the offset between the RSRP corresponding to the second TCI state and the RSRP corresponding to the first TCI state is a difference between the RSRP corresponding to the second TCI state and the RSRP corresponding to the first TCI state. The difference may be a linear value or dB value. In some embodiments, the offset between the RSRP corresponding to the second TCI state and the RSRP corresponding to the first TCI state is a ratio between the RSRP corresponding to the second TCI state and the RSRP corresponding to the first TCI state. The ratio may be a linear value or dB value.

In some embodiments, the offset between the RSRP corresponding to the second TCI state and the RSRP corresponding to the first TCI state can be understood as an offset between an RSRP of a transmission signal corresponding to the second TCI state and an RSRP of a transmission signal corresponding to the first TCI state. As a possible embodiment, the offset between the RSRP corresponding to the second TCI state and the RSRP corresponding to the first TCI state is an offset values between RSRPs of two different uplink reference signal resources/uplink reference signals, which correspond to the second TCI state and the first TCI state respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second TCI state and the RSRP corresponding to the first TCI state is an offset value between an RSRP of a signal corresponding to the first SRS resource measured in the first TRP and an RSRP of a signal corresponding to the second SRS resource measured in the second TRP. A TCI state, which corresponds to the signal corresponding to the first SRS resource, is the first TCI state, and the TCI state, which corresponds to the signal corresponding to the second SRS resource, is the second TCI state.

In some embodiments, the offset between the RSRP corresponding to the second cell and the RSRP corresponding to the first cell is an offset of the RSRP corresponding to the second cell relative to the RSRP corresponding to the first cell. In some embodiments, the offset between the RSRP corresponding to the second cell and the RSRP corresponding to the first cell is an offset of the RSRP corresponding to the first cell relative to the RSRP corresponding to the second cell.

In some embodiments, the offset between the RSRP corresponding to the second cell and the RSRP corresponding to the first cell is a difference between the RSRP corresponding to the second cell and the RSRP corresponding to the first cell. The difference may be a linear value or dB value. In some embodiments, the offset between the RSRP corresponding to the second cell and the RSRP corresponding to the first cell is a ratio between the RSRP corresponding to the second cell and the RSRP corresponding to the first cell. The difference may be a linear value or dB value.

In some embodiments, the offset between the RSRP corresponding to the second cell and the RSRP corresponding to the first cell can be understood as an offset between an RSRP of a transmission signal corresponding to the second cell and an RSRP of a transmission signal corresponding to the first cell. As a possible embodiment, the offset between the RSRP corresponding to the second cell and the RSRP corresponding to the first cell is an offset value between RSRPs of two different uplink reference signal resources/uplink reference signals, which correspond to the second cell and the first cell respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second cell and the RSRP corresponding to the first cell is an offset value between an RSRP of asignal corresponding to the first SRS resource measured at the first TRP and an RSRP of a signal corresponding to the second SRS resource measured at the second TRP. The first SRS resource corresponds to the first cell, and the second SRS resource corresponds to the second cell.

In some embodiments, the offset between the RSRP corresponding to the second SRS resource set and the RSRP corresponding to the first SRS resource set is an offset of the RSRP corresponding to the second SRS resource set relative to the RSRP corresponding to the first SRS resource set. The offset between the RSRP corresponding to the second SRS resource set and the RSRP corresponding to the first SRS resource set is an offset of the RSRP corresponding to the first SRS resource set relative to the RSRP corresponding to the second SRS resource set.

In some embodiments, the offset between the RSRP corresponding to the second SRS resource set and the RSRP corresponding to the first SRS resource set is a difference between the RSRP corresponding to the second SRS resource set and the RSRP corresponding to the first SRS resource set. The difference is a linear value or dB value. In some embodiments, the offset between the RSRP corresponding to the second SRS resource set and the RSRP corresponding to the first SRS resource set is a ratio between the RSRP corresponding to the second SRS resource set and the RSRP corresponding to the first SRS resource set. The ratio is a linear value or dB value.

In some embodiments, the offset between the RSRP corresponding to the second SRS resource set and the RSRP corresponding to the first SRS resource set can be understood as an offset between an RSRP of a transmission signal corresponding to the second SRS resource set and an RSRP of a transmission signal corresponding to the first SRS resource set. As a possible embodiment, the offset between the RSRP corresponding to the second SRS resource set and the RSRP corresponding to the first SRS resource set is an offset value between RSRPs of two different uplink reference signal resources/uplink reference signals, which correspond to the second SRS resource set and the first SRS resource set respectively, as measured at the second TRP and the first TRP. For example, a first SRS resource is a signal resource for transmission towards the first TRP, and a second SRS resource is a signal resource for transmission towards the second TRP; the offset between the RSRP corresponding to the second SRS resource set and the RSRP corresponding to the first SRS resource set is an offset value between an RSRP of a signal corresponding to the first SRS resource measured at the first TRP and an RSRP of a signal corresponding to the second SRS resource measured at the second TRP. The first SRS resource is taken from the first SRS resource set, and the second SRS resource is taken from the second SRS resource set.

In some embodiments, the offset between the RSRP corresponding to the second carrier and the RSRP corresponding to the first carrier is an offset of the RSRP corresponding to the second carrier relative to the RSRP corresponding to the first carrier. In some embodiments, the offset between the RSRP corresponding to the second carrier and the RSRP corresponding to the first carrier is an offset of the RSRP corresponding to the first carrier relative to the RSRP corresponding to the second carrier.

In some embodiments, the offset between the RSRP corresponding to the second carrier and the RSRP corresponding to the first carrier is a difference between the RSRP corresponding to the second carrier and the RSRP corresponding to the first carrier. The difference may be a linear value or dB value. The offset between the RSRP corresponding to the second carrier and the RSRP corresponding to the first carrier is a ratio between the RSRP corresponding to the second carrier and the RSRP corresponding to the first carrier. The ratio may be a linear value or dB value.

In some embodiments, the offset between the RSRP corresponding to the second carrier and the RSRP corresponding to the first carrier can be understood as an offset between an RSRP of a transmission signal corresponding to the second carrier and an RSRP of a transmission signal corresponding to the first carrier. As a possible embodiment, the offset between the RSRP corresponding to the second carrier and the RSRP corresponding to the first carrier is an offset value between RSRPs of two different uplink reference signal resources/uplink reference signals, which correspond to the second carrier and the first carrier respectively, as measured at the second TRP and the first TRP. For example, a first SRS resource is a signal resource for transmission towards the first TRP, and a second SRS resource is a signal resource for transmission towards the second TRP; the offset between the RSRP corresponding to the second carrier and the RSRP corresponding to the first carrier is an offset value between an RSRP of a signal corresponding to the first SRS resource measured at the first TRP and an RSRP of a signal corresponding to the second SRS resource measured at the second TRP. The signal corresponding to the first SRS resource is transmitted to the first TRP through the first carrier, and the signal corresponding to the second SRS resource is transmitted to the second TRP through the second carrier.

In some embodiments, the offset between the RSRP corresponding to the second beam and the RSRP corresponding to the first beam is an offset of the RSRP corresponding to the second beam relative to the RSRP corresponding to the first beam. In some embodiments, the offset between the RSRP corresponding to the second beam and the RSRP corresponding to the first beam is an offset of the RSRP corresponding to the first beam relative to the RSRP corresponding to the second beam.

In some embodiments, the offset between the RSRP corresponding to the second beam and the RSRP corresponding to the first beam is a difference between the RSRP corresponding to the second beam and the RSRP corresponding to the first beam. The difference may be a linear value or dB value. In some embodiments, the offset between the RSRP corresponding to the second beam and the RSRP corresponding to the first beam is a ratio between the RSRP corresponding to the second beam and the RSRP corresponding to the first beam. The ratio is a linear value or dB value.

In some embodiments, the offset between the RSRP corresponding to the second beam and the RSRP corresponding to the first beam can be understood as an offset between an RSRP of a transmission signal corresponding to the second beam and an RSRP of a transmission signal corresponding to the first beam. As a possible embodiment, the offset between the RSRP corresponding to the second beam and the RSRP corresponding to the first beam is an offset value between RSRPs of two different uplink reference signal resources/uplink reference signals, which correspond to the second beam and the first beam respectively, as measured at the second TRP and the first TRP. For example, a first SRS resource is a signal resource for transmission towards the first TRP, and a second SRS resource is a signal resource for transmission towards the second TRP; the offset between the RSRP corresponding to the second beam and the RSRP corresponding to the first beam is an offset value between an RSRP of a signal corresponding to the first SRS resource measured at the first TRP and an RSRP of a signal corresponding to the second SRS resource measured at the second TRP. The signal corresponding to the first SRS resource is transmitted to the first TRP through the first beam; the signal corresponding to the second SRS resource is transmitted to the second TRP through the second beam.

In some embodiments, the offset information includes multiple pieces of pathloss offset information and/or multiple pieces of RSRP offset information.

In some embodiments, the multiple pieces of pathloss offset information have corresponding relationship with the second RSRP, and/or the multiple pieces of pathloss offset information have corresponding relationship with the first signal, and the second RSRP is used to determine the first RSRP. In some embodiments, the second RSRP is an L1-RSRP of the first signal, and the first RSRP is an RSRP (e.g., high layer filtered RSRP) obtained by filtering multiple L1-RSRPs including the second RSRP.

In some embodiments, the corresponding relationship between the multiple pieces of pathloss offset information and the second RSRP is that each pathloss offset information corresponds to one second RSRP. In some embodiments, the corresponding relationship between the multiple pieces of pathloss offset information and the second RSRP is a one-to-one correspondence. That is, the multiple pieces of second RSRPs correspond to the multiple pieces of pathloss offset information in a one-to-one manner. In this case, the UE can determine a power adjustment value for each second RSRP based on its corresponding pathloss offset value, and can better determine the transmission power of the second signal.

In some embodiments, the corresponding relationship between the multiple pieces of pathloss offset information and the first signal is that each of the pathloss offset information corresponds to one first signal. In some embodiments, the corresponding relationship between the multiple pieces of pathloss offset information and the first signal is a one-to-one correspondence, that is, the multiple pieces of pathloss offset information correspond to the multiple pieces of first signals in a one-to-one manner. In this case, the UE can determine a power adjustment value for each first signal based on its corresponding pathloss offset value, and can better determine the transmission power of the second signal.

In some embodiments, the multiple pieces of RSRP offset information has a corresponding relationship with the second RSRP, and/or the multiple pieces of RSRP offset information has a corresponding relationship with the first signal.

In some embodiments, the corresponding relationship between the multiple pieces of RSRP offset information and the second RSRP is that each RSRP offset information corresponds to one second RSRP. In some embodiments, the corresponding relationship between the multiple pieces of RSRP offset information and the second RSRP is a one-to-one correspondence. That is, the multiple second RSRPs correspond to the multiple pieces of RSRP offset information in a one-to-one manner. In this case, the UE can determine an adjusted RSRP value for each second RSRP based on its corresponding RSRP offset information, and can better determine the transmission power of the second signal.

In some embodiments, the corresponding relationship between the multiple pieces of RSRP offset information and the first signal is that each RSRP offset information corresponds to one first signal. In some embodiments, the corresponding relationship between the multiple pieces of RSRP offset information and the first signal is a one-to-one correspondence, that is, the multiple pieces of RSRP offset information corresponds to multiple first signals in a one-to-one manner. In this case, the UE can determine an adjusted RSRP value for each first signal based on its corresponding RSRP offset value, and can better determine the transmission power of the second signal.

In some embodiments, the number of pieces of pathloss offset information is equal to the number of the second RSRPs used to determine the first RSRP. In this case, the network device transmits one piece of corresponding pathloss offset information for each second RSRP.

In some embodiments, the number of pieces of pathloss offset information is less than the number of second RSRPs used to determine the first RSRP. At this point, the network device transmits corresponding pathloss offset information only for part of the second RSRPs, or multiple second RSRPs share the same pathloss offset information. This can save the overhead of pathloss offset information. For example, one piece of pathloss offset information transmitted by the network device can be applicable for a period of time; during this period of time, the UE can determine a high layer filtered RSRP (first RSRP) based on multiple second RSRPs which are corresponding to the same pathloss offset information.

In some optional embodiments, in the above step 103, the determining a pathloss offset and/or reference signal receiving power RSRP offset based on the offset information, includes at least one of the following:
1. when the offset information includes multiple pieces of pathloss offset information, determining the pathloss offset based on filtering offset values corresponding to the multiple pieces of pathloss offset information; determining a transmission power of the second signal based on the pathloss corresponding to the first signal and the pathloss offset.
2. when the offset information includes multiple pieces of RSRP offset information, determining the RSRP offset based on filtering offset values corresponding to the multiple pieces of RSRP offset information.

After obtaining the RSRP offset Δ through the above filtering, the transmission power of the second signal may be determined based on the pathloss corresponding to the first signal and the RSRP offset.

In some embodiments, the filter parameters used for performing high layer filtering on the above offset values are configured by the network device for the UE.

In some embodiments, the filter parameters used for performing high layer filtering on the above offset values are the same as parameters used for determining the high layer filtered RSRP.

In some embodiments, the first signal includes a reference signal corresponding to the first signal resource.

Specifically, the first signal resource includes one or more of the following:
a reference signal resource configured by the network device for the second signal;
a pathloss reference signal resource corresponding to a TCI state associated with the second signal; in some embodiments, configuration information of the TCI state includes the pathloss reference signal resource; in some embodiments, the TCI state is a UL TCI state (i.e., a TCI state for uplink UL transmission) or a joint TCI state (i.e., a TCI state for UL and DL transmission);
a pathloss reference signal resource corresponding to spatial related information associated with the second signal;
a reference signal resource for quasi-colocation type D included in a TCI state associated with the second signal; where the quasi co-location (QCL) type D (TypeD) can be abbreviated as QCL TypeD, which is used to indicate characteristics of spatial Rx parameter Spatial Rx parameter;
a pathloss reference signal resource corresponding to the control resource set pool index CORESETPoolIndex associated with the second signal;
a pathloss reference signal resource associated with a physical downlink control channel PDCCH for scheduling the second signal;
a pathloss reference signal resource corresponding to an initial access physical random access channel PRACH; in some embodiments, the first signal resource is a pathloss reference signal resource corresponding to PRACH transmission which is corresponding to the second signal;
a reference signal (RS) resource in an SSB whose index is the same as that of a first SSB, where the first SSB includes an SSB carrying a master information block (MIB);
a reference signal resource in an SSB whose index is the same as that of a second SSB, where the second SSB is an SSB having the same quasi-colocation (QCL) characteristics as a physical downlink control channel (PDCCH) used for scheduling an initial physical uplink shared channel (PUSCH) transmission; in some embodiments, there is one or more PDCCHs for the initial PUSCH transmission;
a reference signal resource in a group of pathloss reference signal resources configured by the network device; in some embodiments, the group of pathloss reference signal resources is reference signal resources configured by a pathloss reference link pathlossReferenceLinking; in some embodiments, the first signal resource is a reference signal resource in a group of pathloss reference signal resources configured by a base station for the second signal; in some embodiments, the first signal resource is a plurality of reference signal resources in a group of pathloss reference signal resources configured by a base station for the second signal; in some embodiments, when the first signal resource is one reference signal resource in a group of pathloss reference signal resources configured by a base station for the second signal, the one reference signal resource is a reference signal resource with the lowest ID in the group of pathloss reference signal resources;
a pathloss reference signal resource corresponding to a sounding reference signal SRS resource corresponding to the second signal; in some embodiments, the first signal resource is a pathloss reference signal resource corresponding to an SRS resource indication SRI which corresponds to the second signal;
a pathloss reference signal resource corresponding to a physical uplink control channel PUCCH resource with the lowest index in an activated uplink bandwidth part UL BWP where the second signal is located; in some embodiments, the first signal resource is a pathloss reference signal resource in a power control configuration with a lower index among multiple power control configurations corresponding to the PUCCH resource with the lowest index in the activated UL BWP where the second signal is located; in some embodiments, the first signal resource is a pathloss reference signal resource in a spatial configuration corresponding to the PUCCH resource with the lowest index in the activated UL BWP where the second signal is located; in some embodiments, the first signal resource is a pathloss reference signal resource in a spatial configuration with a lower index among the spatial configurations corresponding to the PUCCH resource with the lowest index in the activated UL BWP where the second signal is located;
a QCL reference signal resource associated with a control resource set with the lowest index in an active downlink bandwidth part (DL BWP); or
a reference signal resource corresponding to a TCI state with the lowest identifier ID in an activated BWP of a cell where the second signal is located. In some embodiments, the TCI state includes a DL TCI state. In some embodiments, the TCI state includes a joint TCI state, that is, a DL TCI state and a UL TCI state.

In some embodiments, the offset information includes one or more of the following:
offset information configured for a reference signal resource configured by the network device for the second signal;
offset information corresponding to a TCI state associated with the second signal;
offset information corresponding to spatial related information associated with the second signal;
offset information corresponding to a control resource set pool index associated with the second signal;
offset information associated with a physical downlink control channel PDCCH that schedules the second signal;
offset information corresponding to an initial access physical random access channel PRACH;
offset information corresponding to a sounding reference signal SRS resource corresponding to the second signal;
offset information corresponding to physical uplink control channel PUCCH resource with the lowest index in an activated uplink bandwidth part UL BWP where the second signal is located;
offset information associated with a control resource set with the lowest index in an active downlink bandwidth part DL BWP;
offset information corresponding to a TCI state with the lowest identifier ID in an activated BWP of a cell where the second signal is located; or
offset information indicated by scheduling information for scheduling the second signal.

As an example, the offset information in this embodiment may be referred to as pathloss offset information.

As an example, the offset information corresponding to the TCI state associated with the second signal may be offset information configured by the network device for the TCI state associated with the second signal, and may be configured, for example, through at least one of RRC, MAC-CE and DCI.

As an example, the offset information corresponding to the spatial related information associated with the second signal may be offset information configured by the network device for the spatial related information associated with the second signal, and may be configured, for example, through at least one of RRC, MAC-CE and DCI.

As an example, the offset information corresponding to the control resource pool index associated with the second signal may be offset information configured by the network device for the control resource pool index associated with the second signal, and may be configured, for example, through at least one of RRC, MAC-CE and DCI.

As an example, the offset information corresponding to the initial access physical random access channel PRACH may be offset information configured by the network device for the initial access physical random access channel PRACH, and may be configured exemplarily through at least one of RRC, MAC-CE and DCI.

As an example, the offset information corresponding to the physical uplink control channel PUCCH resource with the lowest index may be offset information configured by the network device for the physical uplink control channel PUCCH resource with the lowest index, and may be configured, for example, through at least one of RRC, MAC-CE and DCI.

As an example, the offset information corresponding to the sounding reference signal SRS resource corresponding to the second signal may be offset information configured by the network device for the sounding reference signal SRS resource corresponding to the second signal, and may be configured, for example, through at least one of RRC, MAC-CE and DCI.

As an example, the offset information corresponding to the physical uplink control channel PUCCH resource with the lowest index may be offset information configured by the network device for the physical uplink control channel PUCCH resource with the lowest index, and may be configured, for example, through at least one of RRC, MAC-CE and DCI.

As an example, the offset information corresponding to the TCI state with the lowest identifier ID in the activated BWP of the cell where the second signal is located, may be offset information configured by the network device for the TCI state with the lowest identifier ID, and may be configured, for example, through at least one of RRC, MAC-CE and DCI.

As an example, the second signal may be SRS/PUSCH/PRACH, etc. The offset information indicated by the scheduling information for scheduling the second signal may be offset information indicated by DCI for scheduling the second signal.

In some embodiments, the TCI state associated with the second signal includes:
a TCI state indicated by the network device through at least one of RRC signaling, MAC-CE signaling, or DCI signaling; or,
a TCI state associated with a resource with the lowest ID in a resource set where a reference signal resource corresponding to the second signal is included; or,
a TCI state associated with a resource set where a reference signal resource corresponding to the second signal is included; or,
a TCI state associated with a reference signal resource corresponding to the second signal; or,
a TCI state indicated by scheduling information for scheduling the second signal.

As an example, the second signal may be PUSCH or PUCCH or SRS or PRACH, etc. The TCI state associated with the second signal may be: a TCI state for uplink and downlink joint transmission configured by the network device through RRC signaling, or a TCI state for uplink transmission configured by the network device through RRC signaling.

As an example, the second signal may be PUSCH or PUCCH or SRS or PRACH, etc. The TCI state associated with the second signal may be: a group of TCI states for uplink and downlink joint transmission or a TCI state for uplink transmission, configured by the network device through RRC signaling; and then a code point is activated through MAC-CE signaling, and the TCI state corresponding to the second signal is a TCI state corresponding to the code point.

As an example, the second signal may be PUSCH or PUCCH or SRS or PRACH, etc. The TCI state associated with the second signal may be: a group of TCI states for uplink and downlink joint transmission or a TCI state for uplink transmission, configured by the network device through RRC signaling; and then a group of code points are activated through MAC-CE signaling, each code point corresponds to one or more TCI states, and then a code point is selected from the code points activated by MAC-CE signaling through DCI, and the TCI state corresponding to the second signal is the TCI state corresponding to the selected code point.

As an example, the second signal may be an SRS. The TCI state associated with the second signal may be a TCI state associated with an SRS resource with the lowest ID in an SRS resource set where the SRS resource corresponding to the second signal is located, that is, a TCI state configured by the network device for the SRS resource with the lowest ID.

As an example, the second signal may be an SRS. The TCI state associated with the second signal may be a TCI state associated with an SRS resource set where an SRS resource corresponding to the second signal is located. For example, a TCI state indicated by the network device for the SRS resource set. For another example, the network device configures the SRS resource set to follow a unified TCI, and the TCI state associated with the SRS resource set is the unified TCI state indicated by the network device.

As an example, the second signal may be an SRS. The TCI state associated with the second signal may be a TCI state indicated by the network device for the SRS resource, which, exemplarily, may be indicated by at least one of RRC signaling, MAC-CE signaling, or DCI signaling.

As an example, the second signal may be SRS/PUSCH/PRACH. The TCI state associated with the second signal may be a TCI state indicated by DCI that schedules the second signal.

According to the uplink signal transmission power determining method in the embodiment of the present disclosure, a first signal and offset information transmitted by a network device is received; a pathloss corresponding to a second signal is determined based on the first signal and the offset information, and a transmission power of the second signal is determined based on the pathloss corresponding to the second signal; or a pathloss corresponding to the first signal is determined based on the first signal, a pathloss offset and/or reference signal receiving power RSRP offset is determined based on the offset information, and a transmission power of a second signal is determined based on the pathloss corresponding to the first signal and the pathloss offset and/or RSRP offset. In this way, when applied to multi-TRP scenarios, for uplink transmissions of a second signal toward a TRP that has no downlink transmission, the transmission power of the second signal can be determined based on offset information and a first signal sent by the network device from another TRP. In more general uplink transmission scenarios (e.g., single-TRP scenarios or more general multi-TRP scenarios), it can also adjust uplink transmission power or path loss based on offset information sent by the network device, thereby achieving more accurate uplink transmission power. In some embodiments, when the above embodiments are applied to determining the uplink signal transmission power for a TRP that has both downlink and uplink transmission, the first signal and the second signal are signals corresponding to the same TRP. In this case, the offset information can be used to adjust uplink transmission power or path loss, thereby enabling the UE to determine a more accurate uplink transmission power or one with better performance.

As shown in FIG. 2, it is a flow chart of an uplink signal transmission power determining method according to an embodiment of the present disclosure, and the method is applied to a network device, that is, executed by the network device. The method may include:
Step 201: transmitting a first signal to a user equipment;

In some embodiments, the first signal includes a reference signal corresponding to a first signal resource. In some embodiments, the first signal is a reference signal transmitted based on the first signal resource. That is, the first signal is transmitted on a time-frequency domain resource corresponding to the first signal resource. In some embodiments, the first signal includes at least one of the following: SSB or CSI-RS. In some embodiments, the first signal resource is a downlink signal resource, including at least one of the following: SSB resource or CSI-RS resource.

In some embodiments, the first signal resource is a periodic signal resource.

In some embodiments, the first signal resource is a semi-persistent signal resource.

In some embodiments, the first signal resource is a non-periodic signal resource.

Step 202: transmitting offset information to the UE.

In some embodiments, the network device transmits the offset information to the UE through at least one of the following:
RRC signaling;
MAC-CE signaling;
DCI signaling.

In some embodiments, after the network device configures the offset information through RRC signaling, the network device may update the offset information through MAC-CE signaling and/or DCI signaling.

In some embodiments, the offset information includes pathloss offset information and/or RSRP offset information. The pathloss offset information is used to indicate/determine a pathloss offset, and the RSRP offset information is used to indicate/determine an RSRP offset. Then, the UE can determine the pathloss offset and/or RSRP offset based on the offset information.

In some embodiments, the pathloss offset is an offset between a pathloss corresponding to a second signal and a pathloss corresponding to the first signal.

In some embodiments, the RSRP offset includes one or more of the following:
an offset between an RSRP corresponding to a second TRP and an RSRP corresponding to a first TRP, where the first TRP is a TRP corresponding to the first signal and the second TRP is a TRP corresponding to the second signal;
an offset between an RSRP corresponding to a second control resource set pool index and an RSRP corresponding to a first control resource set pool index, where the first control resource set pool index is a control resource set pool index corresponding to the first signal, and the second control resource set pool index is a control resource set pool index corresponding to the second signal;
an offset between an RSRP corresponding to a second TCI state and an RSRP corresponding to a first TCI state, where the first TCI state is a TCI state corresponding to the first signal, and the second TCI state is a TCI state corresponding to the second signal;
an offset between an RSRP corresponding to a second cell and an RSRP corresponding to a first cell, where the first cell is a cell corresponding to the first signal, and the second cell is a cell corresponding to the second signal;
an offset between an RSRP corresponding to a second SRS resource set and an RSRP corresponding to a first SRS resource set, where the first SRS resource set is an SRS resource set corresponding to the first signal, and the second SRS resource set is an SRS resource set corresponding to the second signal;
an offset between an RSRP corresponding to a second carrier and an RSRP corresponding to a first carrier, where the first carrier is a carrier corresponding to the first signal, and the second carrier is a carrier corresponding to the second signal; or
an offset between an RSRP corresponding to a second beam and an RSRP corresponding to a first beam, where the first beam is a beam corresponding to the first signal, and the second beam is a beam corresponding to the second signal.

The order in which the network device transmits the first signal and the offset information to the UE may not be in particular order. For example, the network device transmits the first signal and the offset information to the UE at the same time. For another example, the network device transmits the offset information after transmitting the first signal to the UE. For another example, the network device transmits the first signal after transmitting the offset information to the UE. For another example, there are multiple first signals, the offset information indicates an offset, the network device transmits the offset information after transmitting some first signals, and then continues to transmit the first signal. For another example, there are multiple first signals, and there are also multiple pieces of offset information, the network device transmits the first signal and the offset information alternately, for example, the network device transmits some pieces of offset information after transmitting some first signals, and then continues to transmit the first signal, and then continues to transmit the offset information; for another example, the network device transmits one piece of offset information every time it transmits one first signal, etc.

In some embodiments, the offset information is determined by the network device, for example, based on transmission of an uplink signal.

Step 203: receiving a second signal sent by the UE.

The second signal is an uplink signal. In some embodiments, the second signal includes at least one of the following: PUSCH, PUCCH PRACH, SRS, DMRS.

The first signal and the offset information are used to determine the pathloss corresponding to the second signal, and the pathloss corresponding to the second signal is used to determine the transmission power of the second signal; that is, the transmission power of the second signal is determined by the UE based on the pathloss corresponding to the second signal which is determined based on the first signal and the offset information.

Alternatively, the first signal is used to determine the pathloss corresponding to the first signal, and the offset information is used to determine the pathloss offset and/or the reference signal receiving power RSRP offset; the pathloss corresponding to the first signal, and the pathloss offset and/or RSRP offset are used to determine the transmission power of the second signal. That is, the transmission power of the second signal is determined by the UE based on the pathloss corresponding to the first signal, which is determined based on the first signal, and the pathloss offset and/or RSRP offset, which is determined based on the offset information.

The optional implementation method for determining the transmission power of the second signal has been explained on the UE side and will not be repeated here.

Specifically, the network device receives the second signal transmitted by the UE at the determined transmission power of the second signal.

In some embodiments, the network device includes multiple TRPs, and the multiple TRPs include a UL Rx only TRP and other TRPs other than the UL Rx only TRP (i.e., a TRP that can be used for both uplink transmission and downlink transmission). In this way, when the application scenario of the embodiment of the present disclosure is the UL Rx only TRP scenario, other TRPs in the network device will transmit a first signal to the UE, that is, the first signal is not a signal from the UL Rx only TRP, but a signal from other TRPs with downlink signal transmission. In this way, it is convenient for the UE side to calculate the pathloss based on the downlink signal transmitted by other TRPs, and then determine the transmission power of the uplink signal. Of course, the method of the embodiment of the present disclosure is not only applicable to the scenario where the UL Rx only TRP is configured, but also to the general scenario of transmitting uplink signals (such as a single-TRP scenario or a multi-TRP scenario, and the multi-TRP scenario can be a scenario including the UL Rx only TRP or a scenario not including the UL Rx only TRP). For the general scenario of transmitting uplink signals, the transmission power of the uplink signal can also be determined by using the method provided by the embodiment of the present disclosure.

In some embodiments, the first signal and the second signal have at least one of the following relationships:
the first signal and the second signal correspond to different control resource set pool indexes;
the first signal and the second signal correspond to different transmission reception points TRP;
the first signal and the second signal correspond to different transmission control information (TCI) states;
the first signal and the second signal correspond to different sounding reference signal SRS resource sets;
the first signal and the second signal correspond to different cells;
the first signal and the second signal correspond to different carriers.

In case that the first signal and the second signal correspond to different TRPs, the first signal is a downlink signal from one TRP, and the second signal is an uplink signal transmitted to another TRP. Determining the pathloss corresponding to the second signal based on the first signal and the offset information can achieve using a downlink signal of one TRP to determine a pathloss of an uplink signal of another TRP, and then determining the transmission power of the uplink signal. In a multi-TRP scenario including a UL Rx only TRP, it can be used for the UE to calculate a path loss for an uplink signal to be transmitted to the UL Rx-only TRP based on a downlink signal transmitted by the network device from a TRP with DL transmission, and then determine a transmission power of the uplink signal. Determining a path loss corresponding to the first signal based on the first signal, and determining a path loss offset and/or a reference signal receiving power (RSRP) offset based on the offset information, determining a transmission power of a second signal based on the path loss of the first signal as well as the path loss offset and/or RSRP offset, can achieve using a downlink signal of one TRP to determine a transmission power of an uplink signal of another TRP. In a multi-TRP scenario including a UL Rx only TRP, it can be used for the UE to calculate a transmission power of an uplink signal to be transmitted to the UL Rx-only TRP, based on a downlink signal transmitted by the network device from a TRP with DL transmission.

Signals corresponding to different control resource set pools may correspond to different transmission antennas, different beams, different TRPs, etc. When the first signal and the second signal correspond to different control resource set pools (i.e., different control resource set pool indexes CORESETPoolIndex), the first signal is a downlink signal corresponding to one/a group of transmission antennas/beams/TRPs, and the second signal is an uplink signal corresponding to another/another group of transmission antennas/beams/TRPs. Based on the method of this embodiment, the UE can determine a transmission power of an uplink signal corresponding to another one/another group of transmission antennas/beams/TRPs based on a downlink signal of one/a group of transmission antennas/beams/TRPs. In particular, in a multi-TRP scenario, different TRPs can be configured with different control resource set pool indexes CORESETPoolIndex. When the first signal and the second signal correspond to different CORESETPoolIndex, based on the method of this embodiment, the UE can determine a transmission power of an uplink signal of another TRP based on a downlink signal of one TRP. In a multi-TRP scenario including a UL Rx only TRP, it can be used for the UE to calculate a transmission power of an uplink signal transmitted to the UL Rx only TRP based on a downlink signal transmitted by the network device from a TRP with DL transmission.

When the first signal and the second signal correspond to different TCI states, based on the method of this embodiment, the UE can determine a transmission power of an uplink signal corresponding to another TCI state based on a downlink signal corresponding to one TCI state. In some embodiments, different TCI states correspond to different beams and/or TRPs, etc. In particular, in a multi-TRP scenario, when different TRPs can be configured with different TCI states, and the first signal and the second signal correspond to different TCI states, the first signal is a downlink signal from one TRP, and the second signal is an uplink signal transmitted to another TRP, then based on the method of this embodiment, the UE can determine a transmission power of an uplink signal of another TRP based on a downlink signal of one TRP. In a multi-TRP scenario including a UL Rx only TRP, the UE can calculate a transmission power of an uplink signal transmitted to the UL Rx only TRP based on a downlink signal transmitted by the network device from a TRP with DL transmission.

When the first signal and the second signal correspond to different SRS resource sets, based on the method of this embodiment, the UE can determine a transmission power of an uplink signal corresponding to another SRS resource set based on a downlink signal corresponding to one SRS resource set. In particular, different SRS resource sets can correspond to different beams and/or TRPs, etc. In particular, in a multi-TRP scenario, when different TRPs are configured to correspond to different SRS resource sets, in case that the first signal and the second signal correspond to different SRS resource sets, the first signal is a downlink signal from one TRP, and the second signal is an uplink signal transmitted to another TRP, based on the method of this embodiment, the UE can determine a transmission power of an uplink signal of another TRP based on a downlink signal of one TRP. In a multi-TRP scenario including a UL Rx only TRP, it can be used for the UE to calculate a transmission power of an uplink signal transmitted to the UL Rx only TRP based on a downlink signal transmitted by the network device from a TRP with DL transmission.

When the first signal and the second signal correspond to different cells, based on the method of this embodiment, the UE can determine a transmission power of an uplink signal corresponding to one cell based on a downlink signal corresponding to another cell. In particular, in a multi-TRP scenario, different TRPs can be configured as different cells. Then, when the first signal and the second signal correspond to different cells, the first signal is a downlink signal from one TRP, and the second signal is an uplink signal transmitted to another TRP. Based on the method of this embodiment, the UE can determine a transmission power of an uplink signal of another TRP based on a downlink signal of one TRP. In a multi-TRP scenario including a UL Rx only TRP, the UE can calculate a transmission power of an uplink signal transmitted to the UL Rx only TRP, based on a downlink signal transmitted by the network device from a TRP with DL transmission.

When the first signal and the second signal correspond to different carriers, based on the method of this embodiment, the UE can determine, based on a downlink signal corresponding to one carrier, a transmission power of an uplink signal corresponding to another carrier. In particular, in a multi-TRP scenario, different TRPs can be configured with different carriers. When the first signal and the second signal correspond to different carriers, the first signal is a downlink signal from one TRP, and the second signal is an uplink signal transmitted to another TRP, then based on the method of this embodiment, the UE can determine, based on a downlink signal of one TRP, a transmission power of an uplink signal of another TRP. In a multi-TRP scenario including a UL Rx only TRP, the UE can calculate a transmission power of an uplink signal transmitted to the UL Rx only TRP, based on a downlink signal transmitted by the network device from a TRP with DL transmission.

In some embodiments, the offset information includes pathloss offset information and/or RSRP offset information. The pathloss offset information is used to indicate/determine a pathloss offset, and the RSRP offset information is used to indicate/determine an RSRP offset. Then, the UE can determine the pathloss offset and/or RSRP offset based on the offset information.

In some embodiments, the pathloss offset is an offset between a pathloss corresponding to a second signal and a pathloss corresponding to the first signal.

In some embodiments, an offset between the pathloss corresponding to the second signal and the pathloss corresponding to the first signal is an offset of the pathloss corresponding to the second signal (i.e., a pathloss used for determining the transmission power of the second signal) relative to the pathloss corresponding to the first signal (i.e., a pathloss determined based on the first signal). In some embodiments, an offset between the pathloss corresponding to the second signal and the pathloss corresponding to the first signal is an offset of the pathloss corresponding to the first signal relative to the pathloss corresponding to the second signal.

In some embodiments, an offset between the pathloss corresponding to the second signal and the pathloss corresponding to the first signal is a difference between the pathloss corresponding to the second signal and the pathloss corresponding to the first signal. The difference may be a linear value or dB value. In some embodiments, the offset between the pathloss corresponding to the second signal and the pathloss corresponding to the first signal is a ratio between the pathloss corresponding to the second signal and the pathloss corresponding to the first signal. The ratio may be a linear value or dB value.

In some embodiments, the RSRP offset includes one or more of the following:
an offset between an RSRP corresponding to a second TRP and an RSRP corresponding to a first TRP, where the first TRP is a TRP corresponding to the first signal and the second TRP is a TRP corresponding to the second signal;
an offset between an RSRP corresponding to a second control resource set pool index and an RSRP corresponding to a first control resource set pool index, where the first control resource set pool index is a control resource set pool index corresponding to the first signal, and the second control resource set pool index is a control resource set pool index corresponding to the second signal;
an offset between an RSRP corresponding to a second TCI state and an RSRP corresponding to a first TCI state, where the first TCI state is a TCI state corresponding to the first signal, and the second TCI state is a TCI state corresponding to the second signal;
an offset between an RSRP corresponding to a second cell and an RSRP corresponding to a first cell, where the first cell is a cell corresponding to the first signal, and the second cell is a cell corresponding to the second signal;
an offset between an RSRP corresponding to a second SRS resource set and an RSRP corresponding to a first SRS resource set, where the first SRS resource set is an SRS resource set corresponding to the first signal, and the second SRS resource set is an SRS resource set corresponding to the second signal;
an offset between an RSRP corresponding to a second carrier and an RSRP corresponding to a first carrier, where the first carrier is a carrier corresponding to the first signal, and the second carrier is a carrier corresponding to the second signal; or
an offset between an RSRP corresponding to a second beam and an RSRP corresponding to a first beam, where the first beam is a beam corresponding to the first signal, and the second beam is a beam corresponding to the second signal.

In some embodiments, the offset between the RSRP corresponding to the second TRP and the RSRP corresponding to the first TRP is an offset of the RSRP corresponding to the second TRP relative to the RSRP corresponding to the first TRP. In some embodiments, the offset between the RSRP corresponding to the second TRP and the RSRP corresponding to the first TRP is an offset of the RSRP corresponding to the first TRP relative to the RSRP corresponding to the second TRP.

In some embodiments, the offset between the RSRP corresponding to the second TRP and the RSRP corresponding to the first TRP is a difference between the RSRP corresponding to the second TRP and the RSRP corresponding to the first TRP. The difference may be a linear value or dB value. In some embodiments, the offset between the RSRP corresponding to the second TRP and the RSRP corresponding to the first TRP is a ratio between the RSRP corresponding to the second TRP and the RSRP corresponding to the first TRP. The ratio may be a linear value or a dB value.

In some embodiments, the offset between the RSRP corresponding to the second TRP and the RSRP corresponding to the first TRP can be understood as an offset between an RSRP of a transmission signal corresponding to the second TRP and an RSRP of a transmission signal corresponding to the first TRP. As a possible embodiment, the offset between the RSRP corresponding to the second TRP and the RSRP corresponding to the first TRP is an offset value between an RSRP of a signal on the same uplink reference signal resource at the second TRP and its RSRP at the first TRP, such as an offset of an RSRP measured at the first TRP relative to an RSRP measured at the second TRP for the same SRS resource. As another possible embodiment, the offset between the RSRP corresponding to the second TRP and the RSRP corresponding to the first TRP is an offset value between RSRPs of two different uplink reference signal resources/uplink reference signals, which correspond to the second TRP and the first TRP respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second TRP and the RSRP corresponding to the first TRP is an offset between an RSRP of the signal corresponding to the first SRS resource measured at the first TRP and an RSRP of the signal corresponding to the second SRS resource measured at the second TRP.

In some embodiments, the offset between the RSRP corresponding to the second control resource set pool index CORESETPoolIndex and the RSRP corresponding to the first CORESETPoolIndex is an offset of the RSRP corresponding to the second CORESETPoolIndex relative to the RSRP corresponding to the first CORESETPoolIndex. In some embodiments, the offset between the RSRP corresponding to the second CORESETPoolIndex and the RSRP corresponding to the first CORESETPoolIndex is an offset of the RSRP corresponding to the first CORESETPoolIndex relative to the RSRP corresponding to the second CORESETPoolIndex.

In some embodiments, the offset between the RSRP corresponding to the second CORESETPoolIndex and the RSRP corresponding to the first CORESETPoolIndex is a difference between the RSRP corresponding to the second CORESETPoolIndex and the RSRP corresponding to the first CORESETPoolIndex. The difference may be a linear value or a dB value. In some embodiments, the offset between the RSRP corresponding to the second CORESETPoolIndex and the RSRP corresponding to the first CORESETPoolIndex is a ratio between the RSRP corresponding to the second CORESETPoolIndex and the RSRP corresponding to the first CORESETPoolIndex. The ratio may be a linear value or a dB value.

In some embodiments, the offset between the RSRP corresponding to the second CORESETPoolIndex and the RSRP corresponding to the first CORESETPoolIndex can be understood as an offset of an RSRP of a transmission signal corresponding to the second CORESETPoolIndex relative to an RSRP of a transmission signal corresponding to the first CORESETPoolIndex. As a possible embodiment, the offset between the RSRP corresponding to the second CORESETPoolIndex and the RSRP corresponding to the first CORESETPoolIndex is an offset value between RSRPs of two different uplink reference signal resources/uplink reference signals, which correspond to the second CORESETPoolIndex and the first CORESETPoolIndex respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second CORESETPoolIndex and the RSRP corresponding to the first CORESETPoolIndex is an offset between an RSRP of the signal corresponding to the first SRS resource measured at the first TRP and an RSRP of the signal corresponding to the second SRS resource measured at the second TRP. The first SRS resource is taken from resources in the first CORESETPoolIndex, and the second SRS resource is taken from resources in the second CORESETPoolIndex.

In some embodiments, the offset between the RSRP corresponding to the second TCI state and the RSRP corresponding to the first TCI state is an offset of the RSRP corresponding to the second TCI state relative to the RSRP corresponding to the first TCI state. In some embodiments, the offset between the RSRP corresponding to the second TCI state and the RSRP corresponding to the first TCI state is an offset of the RSRP corresponding to the first TCI state relative to the RSRP corresponding to the second TCI state.

In some embodiments, the offset between the RSRP corresponding to the second TCI state and the RSRP corresponding to the first TCI state is a difference between the RSRP corresponding to the second TCI state and the RSRP corresponding to the first TCI state. The difference may be a linear value or dB value. In some embodiments, the offset between the RSRP corresponding to the second TCI state and the RSRP corresponding to the first TCI state is a ratio between the RSRP corresponding to the second TCI state and the RSRP corresponding to the first TCI state. The ratio may be a linear value or dB value.

In some embodiments, the offset between the RSRP corresponding to the second TCI state and the RSRP corresponding to the first TCI state can be understood as an offset between an RSRP of a transmission signal corresponding to the second TCI state and an RSRP of a transmission signal corresponding to the first TCI state. As a possible embodiment, the offset between the RSRP corresponding to the second TCI state and the RSRP corresponding to the first TCI state is an offset value between RSRPs of two different uplink reference signal resources/uplink reference signals, which correspond to the second TCI state and the first TCI state respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second TCI state and the RSRP corresponding to the first TCI state is an offset value between an RSRP of a signal corresponding to the first SRS resource measured in the first TRP and an RSRP of a signal corresponding to the second SRS resource measured in the second TRP. A TCI state, which corresponds to the signal corresponding to the first SRS resource, is the first TCI state; and a TCI state, which corresponds to the signal corresponding to the second SRS resource, is the second TCI state.

In some embodiments, the offset between the RSRP corresponding to the second cell and the RSRP corresponding to the first cell is an offset of the RSRP corresponding to the second cell relative to the RSRP corresponding to the first cell. In some embodiments, the offset between the RSRP corresponding to the second cell and the RSRP corresponding to the first cell is an offset of the RSRP corresponding to the first cell relative to the RSRP corresponding to the second cell.

In some embodiments, the offset between the RSRP corresponding to the second cell and the RSRP corresponding to the first cell is a difference between the RSRP corresponding to the second cell and the RSRP corresponding to the first cell. The difference may be a linear value or dB value. In some embodiments, the offset between the RSRP corresponding to the second cell and the RSRP corresponding to the first cell is a ratio between the RSRP corresponding to the second cell and the RSRP corresponding to the first cell. The difference may be a linear value or dB value.

In some embodiments, the offset between the RSRP corresponding to the second cell and the RSRP corresponding to the first cell can be understood as an offset between an RSRP of a transmission signal corresponding to the second cell and an RSRP of a transmission signal corresponding to the first cell. As a possible embodiment, the offset between the RSRP corresponding to the second cell and the RSRP corresponding to the first cell is an offset value between RSRPs of two different uplink reference signal resources/uplink reference signals, which correspond to the second cell and the first cell respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second cell and the RSRP corresponding to the first cell is an offset value between an RSRP of a signal corresponding to the first SRS resource measured at the first TRP and an RSRP of a signal corresponding to the second SRS resource measured at the second TRP. The first SRS resource corresponds to the first cell, and the second SRS resource corresponds to the second cell.

In some embodiments, the offset between the RSRP corresponding to the second SRS resource set and the RSRP corresponding to the first SRS resource set is an offset of the RSRP corresponding to the second SRS resource set relative to the RSRP corresponding to the first SRS resource set. The offset between the RSRP corresponding to the second SRS resource set and the RSRP corresponding to the first SRS resource set is an offset of the RSRP corresponding to the first SRS resource set relative to the RSRP corresponding to the second SRS resource set.

In some embodiments, the offset between the RSRP corresponding to the second SRS resource set and the RSRP corresponding to the first SRS resource set is a difference between the RSRP corresponding to the second SRS resource set and the RSRP corresponding to the first SRS resource set. The difference is a linear value or dB value. In some embodiments, the offset between the RSRP corresponding to the second SRS resource set and the RSRP corresponding to the first SRS resource set is a ratio between the RSRP corresponding to the second SRS resource set and the RSRP corresponding to the first SRS resource set. The ratio is a linear value or dB value.

In some embodiments, the offset between the RSRP corresponding to the second SRS resource set and the RSRP corresponding to the first SRS resource set can be understood as an offset between an RSRP of a transmission signal corresponding to the second SRS resource set and an RSRP of a transmission signal corresponding to the first SRS resource set. As a possible embodiment, the offset between the RSRP corresponding to the second SRS resource set and the RSRP corresponding to the first SRS resource set is an offset value between RSRPs of two different uplink reference signal resources/uplink reference signals, which correspond to the second SRS resource set and the first SRS resource set respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second SRS resource set and the RSRP corresponding to the first SRS resource set is an offset value between an RSRP of a signal corresponding to the first SRS resource measured at the first TRP and an RSRP of a signal corresponding to the second SRS resource measured at the second TRP. The first SRS resource is taken from the first SRS resource set, and the second SRS resource is taken from the second SRS resource set.

In some embodiments, the offset between the RSRP corresponding to the second carrier and the RSRP corresponding to the first carrier is an offset of the RSRP corresponding to the second carrier relative to the RSRP corresponding to the first carrier. In some embodiments, the offset between the RSRP corresponding to the second carrier and the RSRP corresponding to the first carrier is an offset of the RSRP corresponding to the first carrier relative to the RSRP corresponding to the second carrier.

In some embodiments, the offset between the RSRP corresponding to the second carrier and the RSRP corresponding to the first carrier is a difference between the RSRP corresponding to the second carrier and the RSRP corresponding to the first carrier. The difference may be a linear value or dB value. The offset between the RSRP corresponding to the second carrier and the RSRP corresponding to the first carrier is a ratio between the RSRP corresponding to the second carrier and the RSRP corresponding to the first carrier. The ratio may be a linear value or dB value.

In some embodiments, the offset between the RSRP corresponding to the second carrier and the RSRP corresponding to the first carrier can be understood as an offset between an RSRP of a transmission signal corresponding to the second carrier and an RSRP of a transmission signal corresponding to the first carrier. As a possible embodiment, the offset between the RSRP corresponding to the second carrier and the RSRP corresponding to the first carrier is an offset value between RSRPs of two different uplink reference signal resources/uplink reference signals, which correspond to the second carrier and the first carrier respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second carrier and the RSRP corresponding to the first carrier is an offset value between an RSRP of a signal corresponding to the first SRS resource measured at the first TRP and an RSRP of a signal corresponding to the second SRS resource measured at the second TRP. The signal corresponding to the first SRS resource is transmitted to the first TRP through the first carrier, and the signal corresponding to the second SRS resource is transmitted to the second TRP through the second carrier.

In some embodiments, the offset between the RSRP corresponding to the second beam and the RSRP corresponding to the first beam is an offset of the RSRP corresponding to the second beam relative to the RSRP corresponding to the first beam. In some embodiments, the offset between the RSRP corresponding to the second beam and the RSRP corresponding to the first beam is an offset of the RSRP corresponding to the first beam relative to the RSRP corresponding to the second beam.

In some embodiments, the offset between the RSRP corresponding to the second beam and the RSRP corresponding to the first beam is a difference between the RSRP corresponding to the second beam and the RSRP corresponding to the first beam. The difference may be a linear value or dB value. In some embodiments, the offset between the RSRP corresponding to the second beam and the RSRP corresponding to the first beam is a ratio between the RSRP corresponding to the second beam and the RSRP corresponding to the first beam. The ratio is a linear value or dB value.

In some embodiments, the offset between the RSRP corresponding to the second beam and the RSRP corresponding to the first beam can be understood as an offset between an RSRP of a transmission signal corresponding to the second beam and an RSRP of a transmission signal corresponding to the first beam. As a possible embodiment, the offset between the RSRP corresponding to the second beam and the RSRP corresponding to the first beam is an offset value between RSRPs of two different uplink reference signal resources/uplink reference signals, which correspond to the second beam and the first beam respectively, as measured at the second TRP and the first TRP. For example, a first SRS resource is a signal resource for transmission towards the first TRP, and a second SRS resource is a signal resource for transmission towards the second TRP. The offset between the RSRP corresponding to the second beam and the RSRP corresponding to the first beam is an offset value between an RSRP of a signal corresponding to the first SRS resource measured at the first TRP and an RSRP of a signal corresponding to the second SRS resource measured at the second TRP. The signal corresponding to the first SRS resource is transmitted to the first TRP through the first beam; the signal corresponding to the second SRS resource is transmitted to the second TRP through the second beam.

In some embodiments, the offset information includes multiple pieces of pathloss offset information and/or multiple pieces of RSRP offset information.

In some embodiments, the multiple pieces of pathloss offset information have corresponding relationship with the second RSRP, and/or the multiple pieces of pathloss offset information have corresponding relationship with the first signal. The second RSRP is used to determine the first RSRP. In some embodiments, the second RSRP is an L1-RSRP of the first signal, and the first RSRP is an RSRP (e.g., high layer filtered RSRP) obtained by filtering multiple L1-RSRPs including the second RSRP.

In some embodiments, the corresponding relationship between the multiple pieces of pathloss offset information and the second RSRP is that each pathloss offset information corresponds to one second RSRP. In some embodiments, the corresponding relationship between the multiple pieces of pathloss offset information and the second RSRP is a one-to-one correspondence. That is, multiple second RSRPs correspond to the multiple pieces of pathloss offset information in a one-to-one manner. In this case, the UE can determine a power adjustment value for each second RSRP based on its corresponding pathloss offset value, and can better determine the transmission power of the second signal.

In some embodiments, the corresponding relationship between the multiple pieces of pathloss offset information and the first signal is that each of multiple pieces of pathloss offset information corresponds to one first signal. In some embodiments, the corresponding relationship between the multiple pieces of pathloss offset information and the first signal is a one-to-one correspondence, that is, the multiple pieces of pathloss offset information domains correspond to the multiple first signals in a one-to-one manner. In this case, the UE can determine a power adjustment value for each first signal based on its corresponding pathloss offset value, and can better determine the transmission power of the second signal.

In some embodiments, the multiple pieces of RSRP offset information have corresponding relationship with the second RSRP, and/or the multiple pieces of RSRP offset information have corresponding relationship with the first signal.

In some embodiments, the corresponding relationship between the multiple pieces of RSRP offset information and the second RSRP is that each RSRP offset information corresponds to one second RSRP. In some embodiments, the corresponding relationship between the multiple pieces of RSRP offset information and the second RSRP is a one-to-one correspondence. That is, the multiple second RSRPs correspond to the multiple pieces of RSRP offset information in a one-to-one manner. In this case, the UE can determine an adjusted RSRP value for each second RSRP based on its corresponding RSRP offset information, and can better determine the transmission power of the second signal.

In some embodiments, the corresponding relationship between the multiple pieces of RSRP offset information and the first signal is that each RSRP offset information corresponds to one first signal. In some embodiments, the corresponding relationship between the multiple pieces of RSRP offset information and the first signal is a one-to-one correspondence, that is, the multiple pieces of RSRP offset information correspond to the multiple first signals in a one-to-one manner. In this case, the UE can determine an adjusted RSRP value for each first signal based on its corresponding RSRP offset value, and can better determine the transmission power of the second signal.

In some embodiments, the number of pieces of pathloss offset information is equal to the number of second RSRPs used to determine the first RSRP. In this case, the network device transmits one piece of corresponding pathloss offset information for each second RSRP.

In some embodiments, the number of pieces of pathloss offset information is less than the number of second RSRPs used to determine the first RSRP. At this point, the network device transmits corresponding pathloss offset information only for part of the second RSRPs, or multiple second RSRPs share the same pathloss offset information. This can save the overhead of pathloss offset information. For example, one piece of pathloss offset information transmitted by the network device can be applicable for a period of time; during this period of time, the UE can determine a high layer filtered RSRP (first RSRP) based on multiple second RSRPs which are corresponding to the same pathloss offset information.

In some embodiments, the first signal includes a reference signal corresponding to the first signal resource.

Specifically, the first signal resource includes one or more of the following:
a reference signal resource configured by the network device for the second signal;
a pathloss reference signal resource corresponding to a TCI state associated with the second signal; in some embodiments, configuration information of the TCI state includes the pathloss reference signal resource; in some embodiments, the TCI state is a UL TCI state (i.e., a TCI state for uplink UL transmission) or a joint TCI state (i.e., a TCI state for UL and DL transmission);
a reference signal resource for quasi-colocation type D included in a TCI state associated with the second signal; where the quasi co-location (QCL) type D (TypeD) can be abbreviated as QCL TypeD, which is used to indicate spatial Rx parameter Spatial Rx parameter characteristics;
a pathloss reference signal resource corresponding to spatial related information associated with the second signal;
a pathloss reference signal resource corresponding to the control resource set pool index associated with the second signal;
a pathloss reference signal resource associated with a physical downlink control channel PDCCH for scheduling the second signal;
a pathloss reference signal resource corresponding to an initial access physical random access channel PRACH; in some embodiments, the first signal resource is a pathloss reference signal resource corresponding to PRACH transmission which is corresponding to the second signal;
a reference signal (RS) resource in an SSB whose index is the same as that of a first SSB, where the first SSB includes an SSB carrying a master information block (MIB);
a reference signal resource in an SSB whose index is the same as that of a second SSB, where the second SSB is an SSB having the same quasi-colocation (QCL) characteristics as a physical downlink control channel (PDCCH) used for scheduling an initial physical uplink shared channel (PUSCH) transmission; in some embodiments, there is one or more PDCCHs for the initial PUSCH transmission;
a reference signal resource in a group of pathloss reference signal resources configured by the network device; in some embodiments, the group of pathloss reference signal resources is reference signal resources configured by a pathloss reference link pathlossReferenceLinking; in some embodiments, the first signal resource is a reference signal resource in a group of pathloss reference signal resources configured by a base station for the second signal; in some embodiments, the first signal resource is a plurality of reference signal resources in a group of pathloss reference signal resources configured by a base station for the second signal; in some embodiments, when the first signal resource is one reference signal resource in a group of pathloss reference signal resources configured by a base station for the second signal, the one reference signal resource is a reference signal resource with the lowest ID in the group of pathloss reference signal resources;
a pathloss reference signal resource corresponding to a sounding reference signal SRS resource corresponding to the second signal; in some embodiments, the first signal resource is a pathloss reference signal resource corresponding to an SRS resource indication SRI which corresponds to the second signal;
a pathloss reference signal resource corresponding to a physical uplink control channel PUCCH resource with the lowest index in an activated uplink bandwidth part UL BWP where the second signal is located; in some embodiments, the first signal resource is a pathloss reference signal resource in a power control configuration with a lower index among multiple power control configurations corresponding to the PUCCH resource with the lowest index in the activated UL BWP where the second signal is located; in some embodiments, the first signal resource is a pathloss reference signal resource in a spatial configuration corresponding to the PUCCH resource with the lowest index in the activated UL BWP where the second signal is located; in some embodiments, the first signal resource is a pathloss reference signal resource in a spatial configuration with a lower index among the spatial configurations corresponding to the PUCCH resource with the lowest index in the activated UL BWP where the second signal is located;
a QCL reference signal resource associated with a control resource set with the lowest index in an active downlink bandwidth part (DL BWP); or
a reference signal resource corresponding to a TCI state with the lowest identifier ID in an activated BWP of a cell where the second signal is located. In some embodiments, the TCI state includes a DL TCI state. In some embodiments, the TCI state includes a joint TCI state, that is, a DL TCI state and a UL TCI state.

According to the uplink signal transmission power determining method in the embodiment of the present disclosure, a first signal is transmitted to a user equipment; offset information is transmitted to the UE; a second signal sent by the UE is received, where the first signal and the offset information are used to determine the pathloss corresponding to the second signal, and the transmission power of the second signal is determined based on the pathloss corresponding to the second signal; or, the first signal is used to determine the pathloss corresponding to the first signal, and the offset information is used to determine the pathloss offset and/or the reference signal receiving power RSRP offset; the pathloss corresponding to the first signal, and the pathloss offset and/or RSRP offset are used to determine the transmission power of the second signal. In this way, for uplink transmissions of a second signal toward a TRP that has no downlink transmission, the first signal sent by the network device from other TRPs and the offset information sent by the network device side enable the UE side to determine the transmission power of the second signal based on the first signal and the offset information.

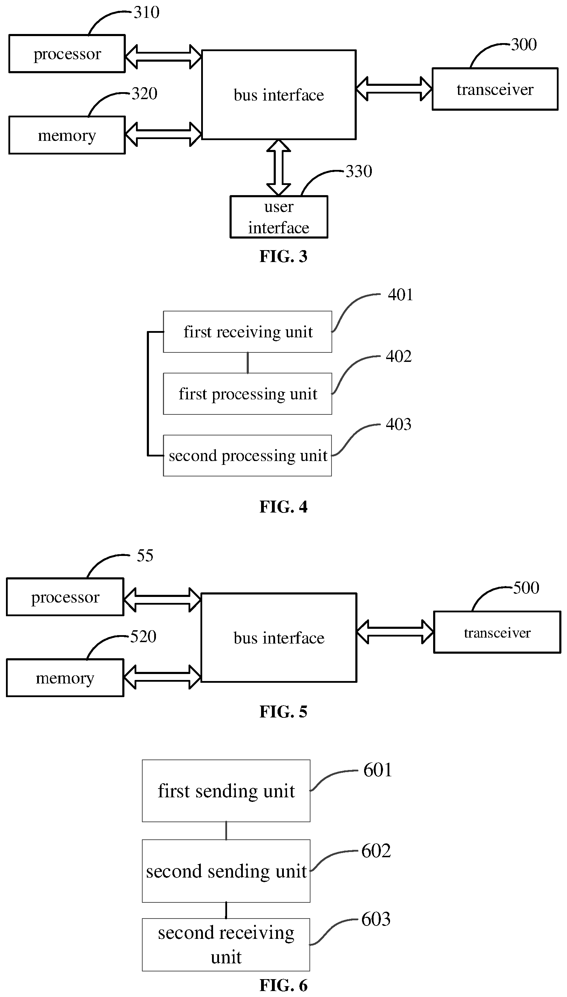

As shown in FIG. 3, one embodiment of the present disclosure further provides a user equipment, including: a memory 320, a transceiver 300, and a processor 310. The memory 320 is used to store program instructions. The transceiver 300 is used to send and receive data under the control of the processor 310. The processor 310 is used to read the program instructions in the memory 320 and perform the following operations:
receiving a first signal and offset information transmitted by a network device;
determining a pathloss corresponding to a second signal based on the first signal and the offset information, and determining a transmission power of the second signal based on the pathloss corresponding to the second signal; or,
determining a pathloss corresponding to the first signal based on the first signal, determining a pathloss offset and/or reference signal receiving power RSRP offset based on the offset information, and determining a transmission power of a second signal based on the pathloss corresponding to the first signal and the pathloss offset and/or RSRP offset.

In FIG. 3, a bus architecture may include any number of interconnected bus and bridge. Specifically, various circuits of one or more processors, which are represented by the processor 310, and one or more memories, which are represented by the memory 320, are linked together. The bus architecture may link various other circuits, such as a peripheral device, voltage regulator and a power management circuit together. These features are well known in this field; therefore, this disclosure does not make further description on these features. The bus interface provides an interface. The transceiver 300 may be multiple elements, including a transmitter and a receiver and provide units, which communicate with other devices on the transmission medium. The transmission medium includes radio channels, wired channels, optical cables, etc. For different UEs, a user interface 330 may be an interface that can be connected to external or internal devices. The connected devices include but are not limited to a small keyboard, a display, a speaker, a microphone, a joystick, etc.

The processor 310 is responsible for managing the bus architecture and the normal processing. The memory 320 may be used to store data used by the processor 310 for performing operations.

In some embodiments, the processor 310 may be a central processing unit (CPU), an application specific integrated circuit (ASIC), a field-programmable gate array (FPGA) or a complex programmable logic device (CPLD). The processor 310 may also adopt multi-core architecture.

The processor 310 calls the computer program stored in the memory to execute any method provided in the embodiment of the present disclosure according to obtained executable instructions. The processor 310 and the memory 320 may also be arranged physically separately.

In some embodiments, the first signal and the second signal have at least one of the following relationships:
the first signal and the second signal correspond to different control resource set pool indexes;
the first signal and the second signal correspond to different transmission reception points TRP;
the first signal and the second signal correspond to different transmission control information (TCI) states;
the first signal and the second signal correspond to different sounding reference signal SRS resource sets;
the first signal and the second signal correspond to different cells;
the first signal and the second signal correspond to different carriers.

In some embodiments, the processor 310 is further used to:
determine first RSRP based on the first signal;
determine pathloss corresponding to the second signal based on the first RSRP and the offset information.

In some embodiments, the processor 310 is further used to:
determine a first RSRP based on the first signal;
determine a pathloss corresponding to the first signal based on the first RSRP and a reference power.

In some embodiments, the offset information includes pathloss offset information and/or RSRP offset information.

The pathloss offset information is used to indicate a pathloss offset, and the pathloss offset is an offset between a pathloss corresponding to the second signal and a pathloss corresponding to the first signal; and/or,
the RSRP offset information is used to indicate an RSRP offset, and the RSRP offset includes one or more of the following:
an offset between an RSRP corresponding to a second TRP and an RSRP corresponding to a first TRP, where the first TRP is a TRP corresponding to the first signal and the second TRP is a TRP corresponding to the second signal;
an offset between an RSRP corresponding to a second control resource set pool index and an RSRP corresponding to a first control resource set pool index, where the first control resource set pool index is a control resource set pool index corresponding to the first signal, and the second control resource set pool index is a control resource set pool index corresponding to the second signal;
an offset between an RSRP corresponding to a second TCI state and an RSRP corresponding to a first TCI state, where the first TCI state is a TCI state corresponding to the first signal, and the second TCI state is a TCI state corresponding to the second signal;
an offset between an RSRP corresponding to a second cell and an RSRP corresponding to a first cell, where the first cell is a cell corresponding to the first signal, and the second cell is a cell corresponding to the second signal;
an offset between an RSRP corresponding to a second SRS resource set and an RSRP corresponding to a first SRS resource set, where the first SRS resource set is an SRS resource set corresponding to the first signal, and the second SRS resource set is an SRS resource set corresponding to the second signal;
an offset between an RSRP corresponding to a second carrier and an RSRP corresponding to a first carrier, where the first carrier is a carrier corresponding to the first signal, and the second carrier is a carrier corresponding to the second signal; or
an offset between an RSRP corresponding to a second beam and an RSRP corresponding to a first beam, where the first beam is a beam corresponding to the first signal, and the second beam is a beam corresponding to the second signal.

In some embodiments, the offset information includes multiple pieces of pathloss offset information and/or multiple pieces of RSRP offset information.

In some embodiments, the multiple pieces of pathloss offset information have corresponding relationship with the second RSRP used to determine the first RSRP, and/or the multiple pieces of pathloss offset information have corresponding relationship with the first signal;
the multiple pieces of RSRP offset information have corresponding relationship with the second RSRP used to determine the first RSRP, and/or the multiple pieces of RSRP offset information have corresponding relationship with the first signal.

In some embodiments, the processor 310 is further used to:
determine a pathloss offset based on filtering offset values corresponding to multiple pieces of pathloss offset information; and/or,
determine an RSRP offset based on filtering offset values corresponding to the multiple pieces of RSRP offset information.

In some embodiments, the first signal includes a reference signal corresponding to the first signal resource.

In some embodiments, the first signal resource includes one or more of the following:
a reference signal resource configured by the network device for the second signal;
a pathloss reference signal resource corresponding to a TCI state associated with the second signal; in some embodiments, configuration information of the TCI state includes the pathloss reference signal resource; in some embodiments, the TCI state is a UL TCI state (i.e., a TCI state for uplink UL transmission) or a joint TCI state (i.e., a TCI state for UL and DL transmission);
a reference signal resource for quasi-colocation type D included in a TCI state associated with the second signal; where the quasi co-location (QCL) type D (TypeD) is used to indicate characteristics of spatial Rx parameter Spatial Rx parameter;
a pathloss reference signal resource corresponding to spatial related information associated with the second signal;
a pathloss reference signal resource corresponding to the control resource set pool index associated with the second signal;
a pathloss reference signal resource associated with a physical downlink control channel PDCCH for scheduling the second signal;
a pathloss reference signal resource corresponding to an initial access physical random access channel PRACH; in some embodiments, the first signal resource is a pathloss reference signal resource corresponding to PRACH transmission which is corresponding to the second signal;
a reference signal (RS) resource in an SSB whose index is the same as that of a first SSB, where the first SSB includes an SSB carrying a master information block (MIB);
a reference signal resource in an SSB whose index is the same as that of a second SSB, where the second SSB is an SSB having the same quasi-colocation (QCL) characteristics as a physical downlink control channel (PDCCH) used for scheduling an initial physical uplink shared channel (PUSCH) transmission; in some embodiments, there is one or more PDCCHs for the initial PUSCH transmission;
a reference signal resource in a group of pathloss reference signal resources configured by the network device; in some embodiments, the group of pathloss reference signal resources is reference signal resources configured by a pathloss reference link pathlossReferenceLinking; in some embodiments, the first signal resource is a reference signal resource in a group of pathloss reference signal resources configured by a base station for the second signal; in some embodiments, the first signal resource is a plurality of reference signal resources in a group of pathloss reference signal resources configured by a base station for the second signal; in some embodiments, when the first signal resource is one reference signal resource in a group of pathloss reference signal resources configured by a base station for the second signal, the one reference signal resource is a reference signal resource with the lowest ID in the group of pathloss reference signal resources;
a pathloss reference signal resource corresponding to a sounding reference signal SRS resource corresponding to the second signal; in some embodiments, the first signal resource is a pathloss reference signal resource corresponding to an SRS resource indication SRI which corresponds to the second signal;
a pathloss reference signal resource corresponding to a physical uplink control channel PUCCH resource with the lowest index in an activated uplink bandwidth part UL BWP where the second signal is located; in some embodiments, the first signal resource is a pathloss reference signal resource in a power control configuration with a lower index among multiple power control configurations corresponding to the PUCCH resource with the lowest index in the activated UL BWP where the second signal is located; in some embodiments, the first signal resource is a pathloss reference signal resource in a spatial configuration corresponding to the PUCCH resource with the lowest index in the activated UL BWP where the second signal is located; in some embodiments, the first signal resource is a pathloss reference signal resource in a spatial configuration with a lower index among the spatial configurations corresponding to the PUCCH resource with the lowest index in the activated UL BWP where the second signal is located;
a QCL reference signal resource associated with a control resource set with the lowest index in an active downlink bandwidth part (DL BWP); or
a reference signal resource corresponding to a TCI state with the lowest identifier ID in an activated BWP of a cell where the second signal is located. In some embodiments, the TCI state includes a DL TCI state. In some embodiments, the TCI state includes a joint TCI state, that is, a DL TCI state and a UL TCI state.

According to the UE in the embodiment of the present disclosure, a first signal and offset information transmitted by a network device is received; a pathloss corresponding to a second signal is determined based on the first signal and the offset information, and a transmission power of the second signal is determined based on the pathloss corresponding to the second signal; or a pathloss corresponding to the first signal is determined based on the first signal, a pathloss offset and/or reference signal receiving power RSRP offset is determined based on the offset information, and a transmission power of a second signal is determined based on the pathloss corresponding to the first signal and the pathloss offset and/or RSRP offset. In this way, for uplink transmissions of a second signal toward a TRP that has no downlink transmission, the transmission power of the second signal can be determined based on the offset information and the first signal sent by the network device from other TRPs.

As shown in FIG. 4, one embodiment of the present disclosure further provides an uplink signal transmission power determination device, including:
a first receiving unit 401 used to receive a first signal and offset information transmitted by a network device;
a first processing unit 402 used to determine a pathloss corresponding to a second signal based on the first signal and the offset information, and determine a transmission power of the second signal based on the pathloss corresponding to the second signal; or,
a second processing unit 403 used to determine a pathloss corresponding to the first signal based on the first signal, determining a pathloss offset and/or reference signal receiving power RSRP offset based on the offset information, and determine a transmission power of a second signal based on the pathloss corresponding to the first signal and the pathloss offset and/or RSRP offset.

In some embodiments, the first signal and the second signal have at least one of the following relationships:
the first signal and the second signal correspond to different control resource set pool indexes;
the first signal and the second signal correspond to different transmission reception points TRP;
the first signal and the second signal correspond to different transmission control information (TCI) states;
the first signal and the second signal correspond to different sounding reference signal SRS resource sets;
the first signal and the second signal correspond to different cells;
the first signal and the second signal correspond to different carriers.

In some embodiments, the first processing unit 402 is further used to:
determine first RSRP based on the first signal;
determine pathloss corresponding to the second signal based on the first RSRP and the offset information.

In some embodiments, the second processing unit 403 is further used to:
determine a first RSRP based on the first signal;
determine a pathloss corresponding to the first signal based on the first RSRP and a reference power.

In some embodiments, the offset information includes pathloss offset information and/or RSRP offset information.

The pathloss offset information is used to indicate a pathloss offset, and the pathloss offset is an offset between a pathloss corresponding to the second signal and a pathloss corresponding to the first signal; and/or,
the RSRP offset information is used to indicate an RSRP offset, and the RSRP offset includes one or more of the following:
an offset between an RSRP corresponding to a second TRP and an RSRP corresponding to a first TRP, where the first TRP is a TRP corresponding to the first signal and the second TRP is a TRP corresponding to the second signal;
an offset between an RSRP corresponding to a second control resource set pool index and an RSRP corresponding to a first control resource set pool index, where the first control resource set pool index is a control resource set pool index corresponding to the first signal, and the second control resource set pool index is a control resource set pool index corresponding to the second signal;
an offset between an RSRP corresponding to a second TCI state and an RSRP corresponding to a first TCI state, where the first TCI state is a TCI state corresponding to the first signal, and the second TCI state is a TCI state corresponding to the second signal;
an offset between an RSRP corresponding to a second cell and an RSRP corresponding to a first cell, where the first cell is a cell corresponding to the first signal, and the second cell is a cell corresponding to the second signal;
an offset between an RSRP corresponding to a second SRS resource set and an RSRP corresponding to a first SRS resource set, where the first SRS resource set is an SRS resource set corresponding to the first signal, and the second SRS resource set is an SRS resource set corresponding to the second signal;
an offset between an RSRP corresponding to a second carrier and an RSRP corresponding to a first carrier, where the first carrier is a carrier corresponding to the first signal, and the second carrier is a carrier corresponding to the second signal; or
an offset between an RSRP corresponding to a second beam and an RSRP corresponding to a first beam, where the first beam is a beam corresponding to the first signal, and the second beam is a beam corresponding to the second signal.

In some embodiments, the offset information includes multiple pieces of pathloss offset information and/or multiple pieces of RSRP offset information.

In some embodiments, the multiple pieces of pathloss offset information have corresponding relationship with the second RSRP used to determine the first RSRP, and/or the multiple pieces of pathloss offset information have corresponding relationship with the first signal; the multiple pieces of RSRP offset information have corresponding relationship with the second RSRP used to determine the first RSRP, and/or the multiple pieces of RSRP offset information have corresponding relationship with the first signal.

In some embodiments, the second processing unit 403 is further used to:
determine a pathloss offset based on filtering offset values corresponding to multiple pieces of pathloss offset information; and/or,
determine an RSRP offset based on filtering offset values corresponding to the multiple pieces of RSRP offset information.

In some embodiments, the first signal includes a reference signal corresponding to the first signal resource.

In some embodiments, the first signal resource includes one or more of the following:
a reference signal resource configured by the network device for the second signal;
a pathloss reference signal resource corresponding to a TCI state associated with the second signal; in some embodiments, configuration information of the TCI state includes the pathloss reference signal resource; in some embodiments, the TCI state is a UL TCI state (i.e., a TCI state for uplink UL transmission) or a joint TCI state (i.e., a TCI state for UL and DL transmission);
a reference signal resource for quasi-colocation type D included in a TCI state associated with the second signal; where the quasi co-location (QCL) type D (TypeD) is used to indicate characteristics of spatial Rx parameter Spatial Rx parameter;
a pathloss reference signal resource corresponding to spatial related information associated with the second signal;
a pathloss reference signal resource corresponding to the control resource set pool index associated with the second signal;
a pathloss reference signal resource associated with a physical downlink control channel PDCCH for scheduling the second signal;
a pathloss reference signal resource corresponding to an initial access physical random access channel PRACH; in some embodiments, the first signal resource is a pathloss reference signal resource corresponding to PRACH transmission which is corresponding to the second signal;
a reference signal (RS) resource in an SSB whose index is the same as that of a first SSB, where the first SSB includes an SSB carrying a master information block (MIB);
a reference signal resource in an SSB whose index is the same as that of a second SSB, where the second SSB is an SSB having the same quasi-colocation (QCL) characteristics as a physical downlink control channel (PDCCH) used for scheduling an initial physical uplink shared channel (PUSCH) transmission; in some embodiments, there is one or more PDCCHs for the initial PUSCH transmission;
a reference signal resource in a group of pathloss reference signal resources configured by the network device; in some embodiments, the group of pathloss reference signal resources is reference signal resources configured by a pathloss reference link pathlossReferenceLinking; in some embodiments, the first signal resource is a reference signal resource in a group of pathloss reference signal resources configured by a base station for the second signal; in some embodiments, the first signal resource is a plurality of reference signal resources in a group of pathloss reference signal resources configured by a base station for the second signal; in some embodiments, when the first signal resource is one reference signal resource in a group of pathloss reference signal resources configured by a base station for the second signal, the one reference signal resource is a reference signal resource with the lowest ID in the group of pathloss reference signal resources;
a pathloss reference signal resource corresponding to a sounding reference signal SRS resource corresponding to the second signal; in some embodiments, the first signal resource is a pathloss reference signal resource corresponding to an SRS resource indication SRI which corresponds to the second signal;
a pathloss reference signal resource corresponding to a physical uplink control channel PUCCH resource with the lowest index in an activated uplink bandwidth part UL BWP where the second signal is located; in some embodiments, the first signal resource is a pathloss reference signal resource in a power control configuration with a lower index among multiple power control configurations corresponding to the PUCCH resource with the lowest index in the activated UL BWP where the second signal is located; in some embodiments, the first signal resource is a pathloss reference signal resource in a spatial configuration corresponding to the PUCCH resource with the lowest index in the activated UL BWP where the second signal is located; in some embodiments, the first signal resource is a pathloss reference signal resource in a spatial configuration with a lower index among the spatial configurations corresponding to the PUCCH resource with the lowest index in the activated UL BWP where the second signal is located;
a QCL reference signal resource associated with a control resource set with the lowest index in an active downlink bandwidth part (DL BWP); or
a reference signal resource corresponding to a TCI state with the lowest identifier ID in an activated BWP of a cell where the second signal is located. In some embodiments, the TCI state includes a DL TCI state. In some embodiments, the TCI state includes a joint TCI state, that is, a DL TCI state and a UL TCI state.

According to the uplink signal transmission power determining device in the embodiment of the present disclosure, a first signal and offset information transmitted by a network device is received; a pathloss corresponding to a second signal is determined based on the first signal and the offset information, and a transmission power of the second signal is determined based on the pathloss corresponding to the second signal; or a pathloss corresponding to the first signal is determined based on the first signal, a pathloss offset and/or reference signal receiving power RSRP offset is determined based on the offset information, and a transmission power of a second signal is determined based on the pathloss corresponding to the first signal and the pathloss offset and/or RSRP offset. In this way, for uplink transmissions of a second signal toward a TRP that has no downlink transmission, the transmission power of the second signal can be determined based on the offset information and the first signal sent by the network device from other TRPs.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

It is to be noted here that the above device provided in the embodiment of the present disclosure can implement all the method steps implemented in the above method embodiment, and can achieve the same technical effect. The parts and beneficial effects of this embodiment that are the same as those in the method embodiment will not be described in detail here.

In some embodiments of the present disclosure, a processor-readable storage medium is further provided. The processor-readable storage medium stores program instructions, and the program instructions are used to enable a processor to execute the following steps:
receiving a first signal and offset information transmitted by a network device;
determining a pathloss corresponding to a second signal based on the first signal and the offset information, and determining a transmission power of the second signal based on the pathloss corresponding to the second signal; or,
determining a pathloss corresponding to the first signal based on the first signal, determining a pathloss offset and/or reference signal receiving power RSRP offset based on the offset information, and determining a transmission power of a second signal based on the pathloss corresponding to the first signal and the pathloss offset and/or RSRP offset.

When the program is executed by the processor, it can implement all the implementation methods of the method embodiment applied to the UE side as shown in FIG. 1, which will not be repeated here to avoid repetition.

As shown in FIG. 5, one embodiment of the present disclosure further provides a network device, including: a memory 520, a transceiver 500, and a processor 510. The memory 520 is used to store program instructions. The transceiver 500 is used to send and receive data under the control of the processor 510. The processor 510 is used to read the program instructions in the memory 520 and perform the following operations:
transmitting a first signal to a user equipment;
transmitting offset information to the UE;
receiving a second signal sent by the UE;
where the first signal and the offset information are used to determine the pathloss corresponding to the second signal, and the pathloss corresponding to the second signal is used to determine the transmission power of the second signal; or,
the first signal is used to determine the pathloss corresponding to the first signal, and the offset information is used to determine the pathloss offset and/or the reference signal receiving power RSRP offset; the pathloss corresponding to the first signal, and the pathloss offset and/or RSRP offset are used to determine the transmission power of the second signal.

In FIG. 5, a bus architecture may include any number of interconnected bus and bridge. Specifically, various circuits of one or more processors, which are represented by the processor 510, and one or more memories, which are represented by the memory 520, are linked together. The bus architecture may link various other circuits, such as a peripheral device, voltage regulator and a power management circuit together. These features are well known in this field; therefore, this disclosure does not make further description on these features. The bus interface provides an interface. The transceiver 500 may be multiple elements, including a transmitter and a receiver and provide units, which communicate with other devices on the transmission medium. The transmission medium includes radio channels, wired channels, optical cables, etc.

The processor 510 is responsible for managing the bus architecture and the normal processing. The memory 520 may be used to store data used by the processor 510 for performing operations.

The processor 510 may be a central processing unit (CPU), an application specific integrated circuit (ASIC), a field-programmable gate array (FPGA) or a complex programmable logic device (CPLD). The processor may also adopt multi-core architecture.

In some embodiments, the first signal and the second signal have at least one of the following relationships:
the first signal and the second signal correspond to different control resource set pool indexes;
the first signal and the second signal correspond to different transmission reception points TRP;
the first signal and the second signal correspond to different transmission control information (TCI) states;
the first signal and the second signal correspond to different sounding reference signal SRS resource sets;
the first signal and the second signal correspond to different cells;
the first signal and the second signal correspond to different carriers.

In some embodiments, the offset information includes pathloss offset information and/or RSRP offset information.

The pathloss offset information is used to indicate a pathloss offset, and the pathloss offset is an offset between a pathloss corresponding to the second signal and a pathloss corresponding to the first signal; and/or,
the RSRP offset information is used to indicate an RSRP offset, and the RSRP offset includes one or more of the following:
an offset between an RSRP corresponding to a second TRP and an RSRP corresponding to a first TRP, where the first TRP is a TRP corresponding to the first signal and the second TRP is a TRP corresponding to the second signal;
an offset between an RSRP corresponding to a second control resource set pool index and an RSRP corresponding to a first control resource set pool index, where the first control resource set pool index is a control resource set pool index corresponding to the first signal, and the second control resource set pool index is a control resource set pool index corresponding to the second signal;
an offset between an RSRP corresponding to a second TCI state and an RSRP corresponding to a first TCI state, where the first TCI state is a TCI state corresponding to the first signal, and the second TCI state is a TCI state corresponding to the second signal;
an offset between an RSRP corresponding to a second cell and an RSRP corresponding to a first cell, where the first cell is a cell corresponding to the first signal, and the second cell is a cell corresponding to the second signal;
an offset between an RSRP corresponding to a second SRS resource set and an RSRP corresponding to a first SRS resource set, where the first SRS resource set is an SRS resource set corresponding to the first signal, and the second SRS resource set is an SRS resource set corresponding to the second signal;
an offset between an RSRP corresponding to a second carrier and an RSRP corresponding to a first carrier, where the first carrier is a carrier corresponding to the first signal, and the second carrier is a carrier corresponding to the second signal; or
an offset between an RSRP corresponding to a second beam and an RSRP corresponding to a first beam, where the first beam is a beam corresponding to the first signal, and the second beam is a beam corresponding to the second signal.

In some embodiments, the offset information includes multiple pieces of pathloss offset information and/or multiple pieces of RSRP offset information.

In some embodiments, the multiple pieces of pathloss offset information have corresponding relationship with the second RSRP used to determine the first RSRP, and/or the multiple pieces of pathloss offset information have corresponding relationship with the first signal; the multiple pieces of RSRP offset information have corresponding relationship with the second RSRP used to determine the first RSRP, and/or the multiple pieces of RSRP offset information have corresponding relationship with the first signal, and the second RSRP is determined by the first signal.

In some embodiments, the first signal is a reference signal corresponding to the first signal resource.

In some embodiments, the first signal resource includes one or more of the following:
a reference signal resource configured by the network device for the second signal;
a pathloss reference signal resource corresponding to a TCI state associated with the second signal; in some embodiments, configuration information of the TCI state includes the pathloss reference signal resource; in some embodiments, the TCI state is a UL TCI state (i.e., a TCI state for uplink UL transmission) or a joint TCI state (i.e., a TCI state for UL and DL transmission);
a reference signal resource for quasi-colocation type D included in a TCI state associated with the second signal; where the quasi co-location (QCL) type D (TypeD) is used to indicate characteristics of spatial Rx parameter Spatial Rx parameter;
a pathloss reference signal resource corresponding to spatial related information associated with the second signal;
a pathloss reference signal resource corresponding to the control resource set pool index associated with the second signal;
a pathloss reference signal resource associated with a physical downlink control channel PDCCH for scheduling the second signal;
a pathloss reference signal resource corresponding to an initial access physical random access channel PRACH; in some embodiments, the first signal resource is a pathloss reference signal resource corresponding to PRACH transmission which is corresponding to the second signal;
a reference signal (RS) resource in an SSB whose index is the same as that of a first SSB, where the first SSB includes an SSB carrying a master information block (MIB);
a reference signal resource in an SSB whose index is the same as that of a second SSB, where the second SSB is an SSB having the same quasi-colocation (QCL) characteristics as a physical downlink control channel (PDCCH) used for scheduling an initial physical uplink shared channel (PUSCH) transmission; in some embodiments, there is one or more PDCCHs for the initial PUSCH transmission;
a reference signal resource in a group of pathloss reference signal resources configured by the network device; in some embodiments, the group of pathloss reference signal resources is reference signal resources configured by a pathloss reference link pathlossReferenceLinking; in some embodiments, the first signal resource is a reference signal resource in a group of pathloss reference signal resources configured by a base station for the second signal; in some embodiments, the first signal resource is a plurality of reference signal resources in a group of pathloss reference signal resources configured by a base station for the second signal; in some embodiments, when the first signal resource is one reference signal resource in a group of pathloss reference signal resources configured by a base station for the second signal, the one reference signal resource is a reference signal resource with the lowest ID in the group of pathloss reference signal resources;
a pathloss reference signal resource corresponding to a sounding reference signal SRS resource corresponding to the second signal; in some embodiments, the first signal resource is a pathloss reference signal resource corresponding to an SRS resource indication SRI which corresponds to the second signal;
a pathloss reference signal resource corresponding to a physical uplink control channel PUCCH resource with the lowest index in an activated uplink bandwidth part UL BWP where the second signal is located; in some embodiments, the first signal resource is a pathloss reference signal resource in a power control configuration with a lower index among multiple power control configurations corresponding to the PUCCH resource with the lowest index in the activated UL BWP where the second signal is located; in some embodiments, the first signal resource is a pathloss reference signal resource in a spatial configuration corresponding to the PUCCH resource with the lowest index in the activated UL BWP where the second signal is located; in some embodiments, the first signal resource is a pathloss reference signal resource in a spatial configuration with a lower index among the spatial configurations corresponding to the PUCCH resource with the lowest index in the activated UL BWP where the second signal is located;
a QCL reference signal resource associated with a control resource set with the lowest index in an active downlink bandwidth part (DL BWP); or
a reference signal resource corresponding to a TCI state with the lowest identifier ID in an activated BWP of a cell where the second signal is located. In some embodiments, the TCI state includes a DL TCI state. In some embodiments, the TCI state includes a joint TCI state, that is, a DL TCI state and a UL TCI state.

According to the network device in the embodiment of the present disclosure, a first signal is transmitted to a user equipment; offset information is transmitted to the UE; a second signal sent by the UE is received, where the first signal and the offset information are used to determine the pathloss corresponding to the second signal, and the transmission power of the second signal is determined based on the pathloss corresponding to the second signal; or, the first signal is used to determine the pathloss corresponding to the first signal, and the offset information is used to determine the pathloss offset and/or the reference signal receiving power RSRP offset; the pathloss corresponding to the first signal, and the pathloss offset and/or RSRP offset are used to determine the transmission power of the second signal. In this way, for uplink transmissions of a second signal toward a TRP that has no downlink transmission, the first signal sent by the network device from other TRPs and the offset information sent by the network device side enable the UE side to determine the transmission power of the second signal based on the first signal and the offset information.

As shown in FIG. 6, one embodiment of the present disclosure further provides an uplink signal transmission power determination device, including:
a first sending unit 601 used to transmit first signal to a user equipment;
a second sending unit 602 used to transmit offset information to the UE;
a second receiving unit 603 used to receive a second signal sent by the UE;
where the first signal and the offset information are used to determine the pathloss corresponding to the second signal, and the pathloss corresponding to the second signal is used to determine the transmission power of the second signal; or,
the first signal is used to determine the pathloss corresponding to the first signal, and the offset information is used to determine the pathloss offset and/or the reference signal receiving power RSRP offset; the pathloss corresponding to the first signal, and the pathloss offset and/or RSRP offset are used to determine the transmission power of the second signal.

In some embodiments, the first signal and the second signal have at least one of the following relationships:
the first signal and the second signal correspond to different control resource set pool indexes;
the first signal and the second signal correspond to different transmission reception points TRP;
the first signal and the second signal correspond to different transmission control information (TCI) states;
the first signal and the second signal correspond to different sounding reference signal SRS resource sets;
the first signal and the second signal correspond to different cells;
the first signal and the second signal correspond to different carriers.

In some embodiments, the offset information includes pathloss offset information and/or RSRP offset information.

The pathloss offset information is used to indicate a pathloss offset, and the pathloss offset is an offset between a pathloss corresponding to the second signal and a pathloss corresponding to the first signal; and/or,
the RSRP offset information is used to indicate an RSRP offset, and the RSRP offset includes one or more of the following:
an offset between an RSRP corresponding to a second TRP and an RSRP corresponding to a first TRP, where the first TRP is a TRP corresponding to the first signal and the second TRP is a TRP corresponding to the second signal;
an offset between an RSRP corresponding to a second control resource set pool index and an RSRP corresponding to a first control resource set pool index, where the first control resource set pool index is a control resource set pool index corresponding to the first signal, and the second control resource set pool index is a control resource set pool index corresponding to the second signal;
an offset between an RSRP corresponding to a second TCI state and an RSRP corresponding to a first TCI state, where the first TCI state is a TCI state corresponding to the first signal, and the second TCI state is a TCI state corresponding to the second signal;
an offset between an RSRP corresponding to a second cell and an RSRP corresponding to a first cell, where the first cell is a cell corresponding to the first signal, and the second cell is a cell corresponding to the second signal;
an offset between an RSRP corresponding to a second SRS resource set and an RSRP corresponding to a first SRS resource set, where the first SRS resource set is an SRS resource set corresponding to the first signal, and the second SRS resource set is an SRS resource set corresponding to the second signal;
an offset between an RSRP corresponding to a second carrier and an RSRP corresponding to a first carrier, where the first carrier is a carrier corresponding to the first signal, and the second carrier is a carrier corresponding to the second signal; or
an offset between an RSRP corresponding to a second beam and an RSRP corresponding to a first beam, where the first beam is a beam corresponding to the first signal, and the second beam is a beam corresponding to the second signal.

In some embodiments, the offset information includes multiple pieces of pathloss offset information and/or multiple pieces of RSRP offset information.

In some embodiments, the multiple pieces of pathloss offset information have corresponding relationship with the second RSRP used to determine the first RSRP, and/or the multiple pieces of pathloss offset information have corresponding relationship with the first signal; the multiple pieces of RSRP offset information have corresponding relationship with the second RSRP used to determine the first RSRP, and/or the multiple pieces of RSRP offset information have corresponding relationship with the first signal, and the second RSRP is determined by the first signal.

In some embodiments, the first signal is a reference signal corresponding to the first signal resource.

In some embodiments, the first signal resource includes one or more of the following:
a reference signal resource configured by the network device for the second signal;
a pathloss reference signal resource corresponding to a TCI state associated with the second signal; in some embodiments, configuration information of the TCI state includes the pathloss reference signal resource; in some embodiments, the TCI state is a UL TCI state (i.e., a TCI state for uplink UL transmission) or a joint TCI state (i.e., a TCI state for UL and DL transmission);
a reference signal resource for quasi-colocation type D included in a TCI state associated with the second signal; where the quasi co-location (QCL) type D (TypeD) is used to indicate characteristics of spatial Rx parameter Spatial Rx parameter;
a pathloss reference signal resource corresponding to spatial related information associated with the second signal;
a pathloss reference signal resource corresponding to the control resource set pool index associated with the second signal;
a pathloss reference signal resource associated with a physical downlink control channel PDCCH for scheduling the second signal;
a pathloss reference signal resource corresponding to an initial access physical random access channel PRACH; in some embodiments, the first signal resource is a pathloss reference signal resource corresponding to PRACH transmission which is corresponding to the second signal;
a reference signal (RS) resource in an SSB whose index is the same as that of a first SSB, where the first SSB includes an SSB carrying a master information block (MIB);
a reference signal resource in an SSB whose index is the same as that of a second SSB, where the second SSB is an SSB having the same quasi-colocation (QCL) characteristics as a physical downlink control channel (PDCCH) used for scheduling an initial physical uplink shared channel (PUSCH) transmission; in some embodiments, there is one or more PDCCHs for the initial PUSCH transmission;
a reference signal resource in a group of pathloss reference signal resources configured by the network device; in some embodiments, the group of pathloss reference signal resources is reference signal resources configured by a pathloss reference link pathlossReferenceLinking; in some embodiments, the first signal resource is a reference signal resource in a group of pathloss reference signal resources configured by a base station for the second signal; in some embodiments, the first signal resource is a plurality of reference signal resources in a group of pathloss reference signal resources configured by a base station for the second signal; in some embodiments, when the first signal resource is one reference signal resource in a group of pathloss reference signal resources configured by a base station for the second signal, the one reference signal resource is a reference signal resource with the lowest ID in the group of pathloss reference signal resources;
a pathloss reference signal resource corresponding to a sounding reference signal SRS resource corresponding to the second signal; in some embodiments, the first signal resource is a pathloss reference signal resource corresponding to an SRS resource indication SRI which corresponds to the second signal;
a pathloss reference signal resource corresponding to a physical uplink control channel PUCCH resource with the lowest index in an activated uplink bandwidth part UL BWP where the second signal is located; in some embodiments, the first signal resource is a pathloss reference signal resource in a power control configuration with a lower index among multiple power control configurations corresponding to the PUCCH resource with the lowest index in the activated UL BWP where the second signal is located; in some embodiments, the first signal resource is a pathloss reference signal resource in a spatial configuration corresponding to the PUCCH resource with the lowest index in the activated UL BWP where the second signal is located; in some embodiments, the first signal resource is a pathloss reference signal resource in a spatial configuration with a lower index among the spatial configurations corresponding to the PUCCH resource with the lowest index in the activated UL BWP where the second signal is located;
a QCL reference signal resource associated with a control resource set with the lowest index in an active downlink bandwidth part (DL BWP); or
a reference signal resource corresponding to a TCI state with the lowest identifier ID in an activated BWP of a cell where the second signal is located. In some embodiments, the TCI state includes a DL TCI state. In some embodiments, the TCI state includes a joint TCI state, that is, a DL TCI state and a UL TCI state.

According to the uplink signal transmission power determining device in the embodiment of the present disclosure, a first signal is transmitted to a user equipment; offset information is transmitted to the UE; a second signal sent by the UE is received, where the first signal and the offset information are used to determine the pathloss corresponding to the second signal, and the transmission power of the second signal is determined based on the pathloss corresponding to the second signal; or, the first signal is used to determine the pathloss corresponding to the first signal, and the offset information is used to determine the pathloss offset and/or the reference signal receiving power RSRP offset; the pathloss corresponding to the first signal, and the pathloss offset and/or RSRP offset are used to determine the transmission power of the second signal. In this way, for uplink transmissions of a second signal toward a TRP that has no downlink transmission, the first signal sent by the network device from other TRPs and the offset information sent by the network device side enable the UE side to determine the transmission power of the second signal based on the first signal and the offset information.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

It is to be noted here that the above device provided in the embodiment of the present disclosure can implement all the method steps implemented in the above method embodiment, and can achieve the same technical effect. The parts and beneficial effects of this embodiment that are the same as those in the method embodiment will not be described in detail here.

In some embodiments of the present disclosure, a processor-readable storage medium is further provided. The processor-readable storage medium stores program instructions, and the program instructions are used to enable a processor to execute the following steps:
transmitting first signal to a user equipment;
transmitting offset information to the UE;
receiving a second signal sent by the UE;
where the first signal and the offset information are used to determine the pathloss corresponding to the second signal, and the pathloss corresponding to the second signal is used to determine the transmission power of the second signal; or,
the first signal is used to determine the pathloss corresponding to the first signal, and the offset information is used to determine the pathloss offset and/or the reference signal receiving power RSRP offset; the pathloss corresponding to the first signal, and the pathloss offset and/or RSRP offset are used to determine the transmission power of the second signal.

When the program is executed by the processor, it can implement all the implementation methods of the method embodiment applied to the network device side as shown in FIG. 2, which will not be repeated here to avoid repetition.

The technical solution of the embodiment of the present disclosure may be applied to various systems, especially the fifth generation mobile communication technology (5th-Generation, 5G) system, the sixth generation mobile communication technology (6th-Generation, 6G) system. For example, applicable systems may be Global System of Mobile communication (GSM) system, Code Division Multiple Access (CDMA) system, Wideband Code Division Multiple Access (WCDMA) general packet radio service (GPRS) system, a long-term evolution (LTE) system, LTE frequency division duplex (FDD) system, LTE time division duplex (TDD) system, advanced long-term evolution (LTE-A) system, universal mobile system (UMTS), Worldwide interoperability for Microwave Access (WiMAX) system, 5G new radio (NR) system, etc. These various systems include user equipment and network device. The system may also include core network parts, such as Evolved Packet System (EPS), 5G System (5G System, 5GS), etc.

The terminal device involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device involved in the embodiment of the present disclosure may be a base station or core network. The base station may include one or more cells providing services for the UE. Depending on different application scenarios, the base station is called as an access point, a device in an access network in communication with the wireless terminal device through one or more sectors on an air interface, and may also be called a Node B, an evolved Node B, an access point, a Base Transceiver Station (BTS), a radio base station, a radio transceiver, a Basic Service Set (BSS), an Extended Service Set (ESS), a B node, an evolved B node (eNB), a home B node, a home evolved B node, a WLAN access point, a WiFi node, or other suitable terms in the field, as long as the same technical effect is achieved, the base station is not limited to specific technical terminology. It is to be noted that although the embodiments of the present invention takes the base station in the NR system as an example, the specific type of base station is not limited. The network device may be used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network architectures, the network device includes a terminal with network functions, such as a terminal in Device-to-Device (D2D) scenarios, a terminal in vehicle-to-everything (V2X) scenarios, etc. In some network architectures, the network device may include a Centralized Unit (CU) node and a Distributed Unit (DU) node, and the centralized unit and distributed unit may also be geographically separated.

Multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

In addition, it is to be noted that in the device and method of the present disclosure, it is apparent that various components or steps may be decomposed and/or recombined. Such decomposition and/or recombination is regarded as equivalent solutions of the present disclosure. Further, the steps for executing the aforementioned series of processes may naturally be performed in the order described chronologically, but need not necessarily be performed in chronological order. Certain steps may be executed in parallel or independently of one another. Those of ordinary skill in the art will appreciate that all or any of the steps or components of the methods and device of the present disclosure may be implemented in any computing device (including processors, storage media, etc.) or network of computing devices, in the form of hardware, firmware, software, or a combination thereof. This can be achieved by those of ordinary skill in the art by applying their basic programming skills after reading the description of the present disclosure.

It is to be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (ASIC), or one or more microprocessors (Digital Signal Processor, DSP), or one or more field programmable gate arrays (FPGA), etc. As another example, when a module described above is implemented in the form of scheduling program codes by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present application are used to distinguish similar objects and are not necessarily used to describe a specific order or sequence. It is to be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. An uplink signal transmission power determining method, applied to a user equipment (UE), comprising:
receiving a first signal and offset information transmitted by a network device;
determining a pathloss corresponding to a second signal based on the first signal and the offset information, and determining a transmission power of the second signal based on the pathloss corresponding to the second signal; or,
determining a pathloss corresponding to the first signal based on the first signal, determining a pathloss offset and/or reference signal receiving power (RSRP) offset based on the offset information, and determining a transmission power of a second signal based on the pathloss corresponding to the first signal and the pathloss offset and/or RSRP offset.

2. The method according to claim 1, wherein the first signal and the second signal have at least one of the following relationships:
the first signal and the second signal correspond to different control resource set pool indexes;
the first signal and the second signal correspond to different transmission reception points (TRPs);
the first signal and the second signal correspond to different transmission control information (TCI) states;
the first signal and the second signal correspond to different sounding reference signal (SRS) resource sets;
the first signal and the second signal correspond to different cells; or,
the first signal and the second signal correspond to different carriers.

3. The method according to claim 1, wherein the determining a pathloss corresponding to a second signal based on the first signal and the offset information, comprises:
determining a first RSRP based on the first signal;
determining the pathloss corresponding to the second signal based on the first RSRP and the offset information.

4. The method according to claim 1, wherein the determining a pathloss corresponding to the first signal based on the first signal, comprises:
determining a first RSRP based on the first signal; and
determining the pathloss corresponding to the first signal based on the first RSRP and a reference power.

5. The method according to claim 1, wherein the offset information comprises pathloss offset information and/or RSRP offset information;
the pathloss offset information is used to indicate a pathloss offset, and the pathloss offset is an offset between the pathloss corresponding to the second signal and the pathloss corresponding to the first signal; and/or,
the RSRP offset information is used to indicate an RSRP offset, and the RSRP offset comprises one or more of the following:
an offset between an RSRP corresponding to a second transmission reception point (TRP) and an RSRP corresponding to a first TRP, wherein the first TRP is a TRP corresponding to the first signal and the second TRP is a TRP corresponding to the second signal;
an offset between an RSRP corresponding to a second control resource set pool index and an RSRP corresponding to a first control resource set pool index, wherein the first control resource set pool index is a control resource set pool index corresponding to the first signal, and the second control resource set pool index is a control resource set pool index corresponding to the second signal;
an offset between an RSRP corresponding to a second transmission control information (TCI) state and an RSRP corresponding to a first TCI state, wherein the first TCI state is a TCI state corresponding to the first signal, and the second TCI state is a TCI state corresponding to the second signal;
an offset between an RSRP corresponding to a second cell and an RSRP corresponding to a first cell, wherein the first cell is a cell corresponding to the first signal, and the second cell is a cell corresponding to the second signal;
an offset between an RSRP corresponding to a second sounding reference signal (SRS) resource set and an RSRP corresponding to a first SRS resource set, wherein the first SRS resource set is an SRS resource set corresponding to the first signal, and the second SRS resource set is an SRS resource set corresponding to the second signal;
an offset between an RSRP corresponding to a second carrier and an RSRP corresponding to a first carrier, wherein the first carrier is a carrier corresponding to the first signal, and the second carrier is a carrier corresponding to the second signal; or
an offset between an RSRP corresponding to a second beam and an RSRP corresponding to a first beam, wherein the first beam is a beam corresponding to the first signal, and the second beam is a beam corresponding to the second signal.

6. The method according to any one of claims 1 to 5, wherein the offset information comprises multiple pieces of pathloss offset information and/or multiple pieces of RSRP offset information.

7. The method according to claim 6, wherein the multiple pieces of pathloss offset information have corresponding relationship with the second RSRP used to determine the first RSRP, and/or the multiple pieces of pathloss offset information have corresponding relationship with the first signal;
the multiple pieces of RSRP offset information have corresponding relationship with the second RSRP used to determine the first RSRP, and/or the multiple pieces of RSRP offset information have corresponding relationship with the first signal.

8. The method according to claim 6, wherein the determining a pathloss offset and/or reference signal receiving power RSRP offset based on the offset information, comprises:
determining a pathloss offset based on filtering offset values corresponding to multiple pieces of pathloss offset information; and/or,
determining an RSRP offset based on filtering offset values corresponding to the multiple pieces of RSRP offset information.

9. The method according to claim 1, wherein the first signal comprises a reference signal corresponding to a first signal resource.

10. The method according to claim 9, wherein the first signal resource comprises one or more of the following:
a reference signal resource configured by the network device for the second signal;
a pathloss reference signal resource corresponding to a transmission control information (TCI) state associated with the second signal;
a reference signal resource for quasi-colocation type D included in a TCI state associated with the second signal;
a pathloss reference signal resource corresponding to spatial related information associated with the second signal;
a pathloss reference signal resource corresponding to a control resource set pool index associated with the second signal;
a pathloss reference signal resource associated with a physical downlink control channel (PDCCH) for scheduling the second signal;
a pathloss reference signal resource corresponding to an initial access physical random access channel (PRACH);
a reference signal resource in a synchronization signal/physical broadcasting channel block (SSB) whose index is the same as that of a first SSB, wherein the first SSB comprises an SSB carrying a master information block (MIB);
a reference signal resource in an SSB whose index is the same as that of a second SSB, wherein the second SSB is an SSB having the same quasi-colocation (QCL) characteristics as a physical downlink control channel (PDCCH) used for scheduling an initial physical uplink shared channel (PUSCH) transmission;
a reference signal resource in a group of pathloss reference signal resources configured by the network device;
a pathloss reference signal resource corresponding to a sounding reference signal (SRS) resource corresponding to the second signal;
a pathloss reference signal resource corresponding to a physical uplink control channel (PUCCH) resource with the lowest index in an activated uplink bandwidth part (UL BWP) where the second signal is located;
a QCL reference signal resource associated with a control resource set with the lowest index in an active downlink bandwidth part (DL BWP); or
a reference signal resource corresponding to a TCI state with the lowest identifier (ID) in an activated BWP of a cell where the second signal is located.

11. The method according to claim 10, wherein the TCI state associated with the second signal comprises:
a TCI state indicated by the network device through at least one of radio resource control (RRC) signaling, media access control control element (MAC-CE) signaling, or downlink control information (DCI) signaling; or,
a TCI state associated with a resource with the lowest ID in a resource set where a reference signal resource corresponding to the second signal is included; or,
a TCI state associated with a resource set where a reference signal resource corresponding to the second signal is included; or,
a TCI state associated with a reference signal resource corresponding to the second signal; or,
a TCI state indicated by scheduling information for scheduling the second signal.

12. The method according to claim 1, wherein the offset information comprises one or more of the following:
offset information configured for a reference signal resource configured by the network device for the second signal;
offset information corresponding to a transmission control information (TCI) state associated with the second signal;
offset information corresponding to spatial related information associated with the second signal;
offset information corresponding to a control resource set pool index associated with the second signal;
offset information associated with a physical downlink control channel (PDCCH) that schedules the second signal;
offset information corresponding to an initial access physical random access channel (PRACH);
offset information corresponding to a sounding reference signal (SRS) resource corresponding to the second signal;
offset information corresponding to physical uplink control channel (PUCCH) resource with the lowest index in an activated uplink bandwidth part (UL BWP) where the second signal is located;
offset information associated with a control resource set with the lowest index in an active downlink bandwidth part (DL BWP);
offset information corresponding to a TCI state with the lowest identifier (ID) in an activated BWP of a cell where the second signal is located; or
offset information indicated by scheduling information for scheduling the second signal.

13. The method according to claim 12, wherein the TCI state associated with the second signal comprises:
a TCI state indicated by the network device through at least one of radio resource control (RRC) signaling, media access control control element (MAC-CE) signaling, or downlink control information (DCI) signaling; or,
a TCI state associated with a resource with the lowest ID in a resource set where a reference signal resource corresponding to the second signal is included; or,
a TCI state associated with a resource set where a reference signal resource corresponding to the second signal is included; or,
a TCI state associated with a reference signal resource corresponding to the second signal; or,
a TCI state indicated by scheduling information for scheduling the second signal.

14. An uplink signal transmission power determining method, applied to a network device, comprising:
transmitting a first signal to a user equipment (UE);
transmitting offset information to the UE; and
receiving a second signal sent by the UE;
wherein the first signal and the offset information are used to determine a pathloss corresponding to the second signal, and the pathloss corresponding to the second signal is used to determine a transmission power of the second signal; or,
the first signal is used to determine a pathloss corresponding to the first signal, and the offset information is used to determine a pathloss offset and/or reference signal receiving power (RSRP) offset; the pathloss corresponding to the first signal, and the pathloss offset and/or RSRP offset are used to determine a transmission power of the second signal.

15. The method according to claim 14, wherein the first signal and the second signal have at least one of the following relationships:
the first signal and the second signal correspond to different control resource set pool indexes;
the first signal and the second signal correspond to different transmission reception points (TRPs);
the first signal and the second signal correspond to different transmission control information (TCI) states;
the first signal and the second signal correspond to different sounding reference signal (SRS) resource sets;
the first signal and the second signal correspond to different cells;
the first signal and the second signal correspond to different carriers.

16. The method according to claim 14, wherein the offset information comprises pathloss offset information and/or RSRP offset information;
the pathloss offset information is used to indicate a pathloss offset, and the pathloss offset is an offset between the pathloss corresponding to the second signal and the pathloss corresponding to the first signal; and/or,
the RSRP offset information is used to indicate an RSRP offset, and the RSRP offset comprises one or more of the following:
an offset between an RSRP corresponding to a second transmission reception point (TRP) and an RSRP corresponding to a first TRP, wherein the first TRP is a TRP corresponding to the first signal and the second TRP is a TRP corresponding to the second signal;
an offset between an RSRP corresponding to a second control resource set pool index and an RSRP corresponding to a first control resource set pool index, wherein the first control resource set pool index is a control resource set pool index corresponding to the first signal, and the second control resource set pool index is a control resource set pool index corresponding to the second signal;
an offset between an RSRP corresponding to a second transmission control information (TCI) state and an RSRP corresponding to a first TCI state, wherein the first TCI state is a TCI state corresponding to the first signal, and the second TCI state is a TCI state corresponding to the second signal;
an offset between an RSRP corresponding to a second cell and an RSRP corresponding to a first cell, wherein the first cell is a cell corresponding to the first signal, and the second cell is a cell corresponding to the second signal;
an offset between an RSRP corresponding to a second SRS resource set and an RSRP corresponding to a first SRS resource set, wherein the first SRS resource set is an SRS resource set corresponding to the first signal, and the second SRS resource set is an SRS resource set corresponding to the second signal;
an offset between an RSRP corresponding to a second carrier and an RSRP corresponding to a first carrier, wherein the first carrier is a carrier corresponding to the first signal, and the second carrier is a carrier corresponding to the second signal; or
an offset between an RSRP corresponding to a second beam and an RSRP corresponding to a first beam, wherein the first beam is a beam corresponding to the first signal, and the second beam is a beam corresponding to the second signal.

17. The method according to any one of claims 14 to 16, wherein the offset information comprises multiple pieces of pathloss offset information and/or multiple pieces of RSRP offset information.

18. The method according to claim 17, wherein the multiple pieces of pathloss offset information have corresponding relationship with the second RSRP used to determine the first RSRP, and/or the multiple pieces of pathloss offset information have corresponding relationship with the first signal;
the multiple pieces of RSRP offset information have corresponding relationship with the second RSRP used to determine the first RSRP, and/or the multiple pieces of RSRP offset information have corresponding relationship with the first signal; the second RSRP is determined according to the first signal.

19. The method according to claim 14, wherein the first signal comprises a reference signal corresponding to a first signal resource.

20. The method according to claim 19, wherein the first signal resource comprises one or more of the following:
a reference signal resource configured by the network device for the second signal;
a pathloss reference signal resource corresponding to a transmission control information (TCI) state associated with the second signal;
a reference signal resource for quasi-colocation type D included in a TCI state associated with the second signal;
a pathloss reference signal resource corresponding to spatial related information associated with the second signal;
a pathloss reference signal resource corresponding to a control resource set pool index associated with the second signal;
a pathloss reference signal resource associated with a physical downlink control channel (PDCCH) for scheduling the second signal;
a pathloss reference signal resource corresponding to an initial access physical random access channel (PRACH);
a reference signal resource in a synchronization signal/physical broadcasting channel block (SSB) whose index is the same as that of a first SSB, wherein the first SSB comprises an SSB carrying a master information block (MIB);
a reference signal resource in an SSB whose index is the same as that of a second SSB, wherein the second SSB is an SSB having the same quasi-colocation (QCL) characteristics as a physical downlink control channel (PDCCH) used for scheduling an initial physical uplink shared channel (PUSCH) transmission;
a reference signal resource in a group of pathloss reference signal resources configured by the network device;
a pathloss reference signal resource corresponding to a sounding reference signal (SRS) resource corresponding to the second signal;
a pathloss reference signal resource corresponding to a physical uplink control channel (PUCCH) resource with the lowest index in an activated uplink bandwidth part (UL BWP) where the second signal is located;
a QCL reference signal resource associated with a control resource set with the lowest index in an active downlink bandwidth part (DL BWP); or
a reference signal resource corresponding to a TCI state with the lowest identifier (ID) in an activated BWP of a cell where the second signal is located.

21. The method according to claim 20, wherein the TCI state associated with the second signal comprises:
a TCI state indicated by the network device through at least one of radio resource control (RRC) signaling, media access control control element (MAC-CE) signaling, or downlink control information (DCI) signaling; or,
a TCI state associated with a resource with the lowest ID in a resource set where a reference signal resource corresponding to the second signal is included; or,
a TCI state associated with a resource set where a reference signal resource corresponding to the second signal is included; or,
a TCI state associated with a reference signal resource corresponding to the second signal; or,
a TCI state indicated by scheduling information for scheduling the second signal.

22. The method according to claim 14, wherein the offset information comprises one or more of the following:
offset information configured for a reference signal resource configured by the network device for the second signal;
offset information corresponding to a transmission control information (TCI) state associated with the second signal;
offset information corresponding to spatial related information associated with the second signal;
offset information corresponding to a control resource set pool index associated with the second signal;
offset information associated with a physical downlink control channel (PDCCH) that schedules the second signal;
offset information corresponding to an initial access physical random access channel (PRACH);
offset information corresponding to a sounding reference signal SRS resource corresponding to the second signal;
offset information corresponding to physical uplink control channel (PUCCH) resource with the lowest index in an activated uplink bandwidth part (UL BWP) where the second signal is located;
offset information associated with a control resource set with the lowest index in an active downlink bandwidth part (DL BWP);
offset information corresponding to a TCI state with the lowest identifier (ID) in an activated BWP of a cell where the second signal is located; or
offset information indicated by scheduling information for scheduling the second signal.

23. The method according to claim 22, wherein the TCI state associated with the second signal comprises:
a TCI state indicated by the network device through at least one of radio resource control (RRC) signaling, media access control control element (MAC-CE) signaling, or downlink control information (DCI) signaling; or,
a TCI state associated with a resource with the lowest ID in a resource set where a reference signal resource corresponding to the second signal is included; or,
a TCI state associated with a resource set where a reference signal resource corresponding to the second signal is included; or,
a TCI state associated with a reference signal resource corresponding to the second signal; or,
a TCI state indicated by scheduling information for scheduling the second signal.

24. A user equipment (UE), comprising: a memory, a transceiver, and a processor;
wherein the memory is used to store program instructions; the transceiver is used to send and receive data under the control of the processor; the processor is used to read the program instructions in the memory and perform the following operations:
receiving a first signal and offset information transmitted by a network device;
determining a pathloss corresponding to a second signal based on the first signal and the offset information, and determining a transmission power of the second signal based on the pathloss corresponding to the second signal; or,
determining a pathloss corresponding to the first signal based on the first signal, determining a pathloss offset and/or reference signal receiving power (RSRP) offset based on the offset information, and determining a transmission power of a second signal based on the pathloss corresponding to the first signal and the pathloss offset and/or RSRP offset.

25. An uplink signal transmission power determination device, comprising:
a first receiving unit used to receive a first signal and offset information transmitted by a network device;
a first processing unit used to determine a pathloss corresponding to a second signal based on the first signal and the offset information, and determine a transmission power of the second signal based on the pathloss corresponding to the second signal; or,
a second processing unit used to determine a pathloss corresponding to the first signal based on the first signal, determining a pathloss offset and/or reference signal receiving power (RSRP) offset based on the offset information, and determine a transmission power of a second signal based on the pathloss corresponding to the first signal and the pathloss offset and/or RSRP offset.

26. A network device, comprising: a memory, a transceiver, and a processor;
wherein the memory is used to store program instructions; the transceiver is used to send and receive data under the control of the processor; the processor is used to read the program instructions in the memory and perform the following operations:
transmitting a first signal to a user equipment (UE);
transmitting offset information to the UE; and
receiving a second signal sent by the UE;
wherein the first signal and the offset information are used to determine a pathloss corresponding to the second signal, and the pathloss corresponding to the second signal is used to determine a transmission power of the second signal; or,
the first signal is used to determine a pathloss corresponding to the first signal, and the offset information is used to determine a pathloss offset and/or reference signal receiving power (RSRP) offset; the pathloss corresponding to the first signal, and the pathloss offset and/or RSRP offset are used to determine the transmission power of the second signal.

27. An uplink signal transmission power determination device, comprising:
a first sending unit used to transmit first signal to a user equipment (UE);
a second sending unit used to transmit offset information to the UE; and
a second receiving unit used to receive a second signal sent by the UE;
wherein the first signal and the offset information are used to determine a pathloss corresponding to the second signal, and the pathloss corresponding to the second signal is used to determine a transmission power of the second signal; or,
the first signal is used to determine a pathloss corresponding to the first signal, and the offset information is used to determine a pathloss offset and/or reference signal receiving power (RSRP) offset; the pathloss corresponding to the first signal, and the pathloss offset and/or RSRP offset are used to determine a transmission power of the second signal.

28. A processor-readable storage medium, comprising: program instructions stored thereon; wherein the program instructions are used to cause a processor to perform steps of the uplink signal transmission power determining method according to any one of claims 1 to 13, or perform steps of the uplink signal transmission power determining method according to any one of claims 14 to 23.
